# EUROPEAN PATENT APPLICATION

(11) **EP 4 016 921 A1**
(43) Date of publication of application: **22.06.2022**
(21) Application number: 19942074.6
(22) Date of filing: 19.08.2019
(51) Int. Cl.: H04L 9/32

(54) **CERTIFICATE MANAGEMENT METHOD AND APPARATUS**

(71) Applicant: Huawei Technologies Co., Ltd., Longgang District Shenzhen, Guangdong 518129 (CN)
(72) Inventor: WU, Di, Shenzhen, Guangdong 518129 (CN); LIANG, Zhijian, Shenzhen, Guangdong 518129 (CN); ZHENG, Hongda, Shenzhen, Guangdong 518129 (CN)
(74) Representative: Körber, Martin Hans
(86) International application number: PCT/CN2019/101450
(87) International publication number: WO 2021/031087

(57) **Abstract**

A certificate management method and apparatus are provided, to resolve inefficient management and control of a digital certificate and a private key of a DRM client. A solution adopted is specifically: using different modules to implement a function of processing data related to a client application and a function of writing/reading a digital certificate/private key. A functional module responsible for writing and storing a digital certificate and a private key is referred to as a key management TA, and a functional module responsible for processing data related to a client application is a service TA. The key management TA writes and stores digital certificates and private keys of different clients, and centrally manages the digital certificates and the private keys. The key management TA encrypts the digital certificates and the private keys of different clients with passwords, and associatively stores encrypted digital certificates and private keys by using different identification information.

## Description

### TECHNICAL FIELD

This application relates to the field of communications technologies, and in particular, to a certificate management method and apparatus.

### BACKGROUND

With widespread of mobile connected devices, the ever-growing consumer markets are becoming mature, digital rights management (digital rights management, DRM) of audio and video content also attracts more attention. Specifically, a digital certificate technology is used to ensure end-to-end protection in an audio and video content distribution process. A DRM server that provides audio and video content authorizes a DRM client in a terminal device to access digital content of different quality based on different security levels. A digital certificate and a private key required for accessing digital content with a high security level are burnt in a DRM client in a terminal device before delivery. Therefore, digital certificates and private keys of different DRM clients are separately burnt. As a result, management and control of the digital certificates and the private keys of the DRM clients are inefficient.

### SUMMARY

Embodiments of this application provide a certificate management method and apparatus, to resolve inefficient management and control of digital certificates and private keys of DRM clients.

According to a first aspect, an embodiment of this application provides a certificate management method. The method is applied to an apparatus in which a trusted execution environment TEE is deployed, an offline burning interface is further deployed in the apparatus, and a key management trusted application TA is deployed in the TEE. A rich execution environment REE may further be deployed in the apparatus, and the foregoing offline burning interface may be deployed in the REE. The method specifically includes: The key management TA obtains digital rights management DRM parameters via the offline burning interface. The DRM parameters include an address of a first digital certificate, an address of a first private key, and a transport key. The first digital certificate is a digital certificate obtained by encrypting a second digital certificate with the transport key. The first private key is a private key obtained by encrypting a second private key with the transport key. The second private key is used to sign data to be sent to a DRM server, or is used to decrypt data from the DRM server. The key management TA separately obtains the first digital certificate and the first private key based on the address of the first digital certificate and the address of the first private key, and separately decrypts the first digital certificate and the first private key with the transport key to obtain the second digital certificate and the second private key. The key management TA associatively stores the second digital certificate, the second private key, and first identification information, where the first identification information is used to identify the second digital certificate and the second private key.

The offline burning interface is newly defined in this embodiment of this application. According to the foregoing design, digital certificates and private keys of different DRM clients are written into secure storage of the key management TA via the offline burning interface. The key management TA is responsible for storing and managing the certificates and the private keys. When being stored, different digital certificates and private keys correspond to different identification information, so that the digital certificates and the private keys of different DRM clients may be written into the secure storage corresponding to the key management TA via the offline burning interface, and the secure storage centrally stores and manages the digital certificates and the private keys. The different DRM clients can subsequently obtain the digital certificates and the private keys from the key management TA. This improves burning efficiency and management and control efficiency of the digital certificates and the private keys.

In a possible design, the DRM parameters further include a first password. In this case, when the key management TA associatively stores the second digital certificate, the second private key, and the first identification information, the following manner may be used: The key management TA separately encrypts the second digital certificate and the second private key with the first password to obtain a third digital certificate and a third private key; and the key management TA associatively stores the third digital certificate, the third private key, and the first identification information, where the first identification information is used to identify the third digital certificate and the third private key.

According to the foregoing design, when a digital certificate and a private key are stored associatively, a password is used for encrypted storage. Therefore, when a service TA responsible for service processing needs to use the digital certificate and the private key, the service TA needs to use the password and the first identification information to obtain the digital certificate and the private key. This improves security of the digital certificate and the private key.

In a possible design, N service TAs and a transmission interface are further deployed in the TEE, where N is a positive integer.

A first service TA obtains first information, where the first information includes the first identification information. The first service TA is any one of the N service TAs. The first service TA obtains the second digital certificate associated with the first identification information from the key management TA via the transmission interface.

In the foregoing design, for different service TAs, a same digital certificate and private key may be used, or different digital certificates and private keys may be used. In both ways, the certificate and the key are obtained by a unified key management TA, so that a function of processing data related to a client application and a function of writing/reading a digital certificate/private key are separately implemented by using different modules. To be specific, a functional module responsible for writing and storing a digital certificate and a private key is a key management TA, and a functional module responsible for processing data related to a client application is a service TA. This improves security of the digital certificate and the private key. In addition, different service TAs can only use the transmission interface deployed in the TEE to access and use the digital certificate and the private key stored in the key management TA. This ensures privacy of the private key and the digital certificate.

In a possible design, if the DRM parameters further include the first password, the first information further includes the first password. The first service TA obtains the second digital certificate from the key management TA via the transmission interface based on the first identification information and the first password.

According to the foregoing design, when a service TA responsible for service processing needs to use the digital certificate and the private key, the service TA needs to use the password and the first identification information obtain the digital certificate and the private key. This further improves security of the digital certificate and the private key. In addition, a new client may be added, and the newly added client may read the digital certificate by using the identification information, or the identification information and the password, or implement service processing such as data signature or data decryption through the key management TA. In addition, different service TAs may use the same first identification information, or the same first identification information and the same first password to obtain a digital certificate from the key management TA.

In a possible design, that the first service TA obtains the second digital certificate from the key management TA via the transmission interface based on the first identification information and the first password includes: The first service TA sends a first instruction to the key management TA via the transmission interface, where the first instruction carries the first password and the first identification information. The key management TA obtains the third digital certificate associated with the first identification information from the stored digital certificate. The key management TA decrypts the third digital certificate with the first password to obtain the second digital certificate, and sends the second digital certificate to the first service TA via the transmission interface.

In the foregoing design, in a case in which the password is incorrect, the service TA cannot obtain the digital certificate from the key management TA. This improves security of the digital certificate.

In a possible design, the first service TA is deployed in the TEE, and the method further includes: The first service TA sends a second instruction to the key management TA, where the second instruction carries first data and the first identification information, and the first service TA is any one of the N service TAs. The key management TA obtains the second private key associated with the first identification information from the stored key, and signs or decrypts the first data with the second private key to obtain second data. The key management TA sends the second data to the first service TA.

In the foregoing design, the service TA has no permission to use the private key, and only the key management TA has the permission to use the private key. When the service TA needs to use the private key to sign or decrypt data, the key management TA implements signing or decryption, and the key management TA sends signed data or decrypted data to the service TA. In other words, the service TA cannot really access the private key, which improves security of the private key. In addition, different service TAs may use the same first identification information, or the same first identification information and the same first password to sign or decrypt data through the key management TA.

In a possible design, if the DRM parameters further include the first password, the second instruction further includes the first password. That the first data is signed or decrypted with the second private key to obtain second data includes: The key management TA obtains the third private key associated with the first identification information from the stored key, and decrypts the third private key with the first password to obtain the second private key. The key management TA signs or decrypts the first data with the second private key to obtain the second data, and sends the second data to the first service TA.

In the foregoing design, the service TA has no permission to use the private key, and only the key management TA has the permission to use the private key. When the service TA needs to use the private key to sign or decrypt data, the key management TA implements signing or decryption based on identification information and a password, and the key management TA sends signed data or decrypted data to the service TA. In a case in which the service TA cannot provide correct identification information or a correct password, the data cannot be signed or decrypted. This further improves security of the private key.

In a possible design, the DRM parameters further include at least one of the following: a length of the transport key, a length of the first identification information, a length of the first private key, and a length of the first digital certificate.

In a possible design, the DRM parameters further include a length of the first password.

In a possible design, the offline burning interface is a function interface, and an input variable of the offline burning interface includes any one of the DRM parameters.

In a possible design, the transmission interface is a function interface, and the transmission interface includes at least one of the following: an identification applying interface, a certificate reading/writing interface, a private key signing interface, a private key decryption interface, and an online burning interface. An input variable of the identification applying interface is null. An input variable of the certificate reading/writing interface includes the first identification information or includes the first identification information and the first password. An input variable of the private key signing interface comprises the first identification information and to-be-signed data or includes the first identification information, the first password, and the to-be-signed data. An input variable of the private key decryption interface includes the first identification information and to-be-decrypted data or includes the first identification information, the first password, and the to-be-decrypted data. An input variable of the online burning interface includes an encrypted to-be-written digital certificate, an encrypted to-be-written private key, and a transport key used to encrypt the to-be-written digital certificate and the to-be-written private key.

In a possible design, the function interface is an application programming interface API.

In a possible design, the transport key includes a first transport key and a second transport key. The first digital certificate is a digital certificate obtained by encrypting the second digital certificate with the first transport key, and the first private key is a private key obtained by encrypting the second private key with the second transport key. That the key management TA separately encrypts the first digital certificate and the first private key with the transport key to obtain the second digital certificate and the second private key includes: The key management TA decrypts the first digital certificate with the first transport key to obtain the second digital certificate, and decrypts the first private key with the second transport key to obtain the second private key.

In the foregoing design, different transport keys are used to separately transfer the digital certificate and the private key to the key management TA. This further improves security of the digital certificate and the private key.

In a possible design, the transport key is a key encrypted with a key ladder. That the key management TA separately encrypts the first digital certificate and the first private key with the transport key to obtain the second digital certificate and the second private key includes: The key management TA decrypts the transport key with the key ladder, and separately decrypts the first digital certificate and the first private key with a decrypted transport key to obtain the second digital certificate and the second private key.

In the foregoing design, the transport key is encrypted with the key ladder. The key ladder may be built in a chip. This can improve security in transferring the transport key to the key management TA, and can further improve security of the digital certificate and the private key.

In a possible design, a second service TA is deployed in the TEE. A transmission interface is deployed in the apparatus in which the trusted execution environment TEE is deployed. The method further includes: The second service TA receives to-be-written parameters, where the to-be-written parameters include a fourth digital certificate, a fourth private key, and a third transport key, the fourth digital certificate is a digital certificate obtained by encrypting a fifth digital certificate with the third transport key, and the fourth private key is a private key obtained by encrypting a fifth private key corresponding to the fifth digital certificate with the third transport key. The second service TA applies for second identification information from the key management TA via the transmission interface. The second service TA sends the fourth digital certificate, the fourth private key, the third transport key, and the second identification information to the key management TA. The key management TA separately decrypts the fourth digital certificate and the fourth private key with the third transport key to obtain the fifth digital certificate and the fifth private key. The key management TA associatively stores the fifth digital certificate, the fifth private key, and the second identification information. The second service TA stores the second identification information.

In the foregoing design, a method for writing the digital certificate and the private key online is provided, which may update an original digital certificate and a private key that are written offline, or may add a new digital certificate and a private key in addition to the original digital certificate and the private key for use of more DRM clients. This improves management and control efficiency of digital certificates and private keys.

In a possible design, the method further includes: The second service TA generates a second password, and stores the second password. The second service TA sends the second password to the key management TA. That the key management TA associatively stores the fifth digital certificate, the fifth private key, and the second identification information associatively includes: The key management TA separately encrypts the fifth digital certificate and the fifth private key with the second password to obtain a sixth digital certificate and a sixth private key, and associatively stores the sixth digital certificate, the sixth private key, and the second identification information. The digital certificate and the private key are stored by using the password and the identification information. This improves security of the digital certificate and the private key.

According to a second aspect, an embodiment of this application provides another certificate management method. The method is applied to an apparatus in which a trusted execution environment TEE is deployed. A key management trusted application TA and N service TAs are deployed in the TEE, where N is a positive integer. A transmission interface is further deployed in the apparatus in which the TEE is deployed. The method includes: Any service TA of the N service TAs receives to-be-written parameters, where the to-be-written parameters include a fourth digital certificate, a fourth private key, and a third transport key, the fourth digital certificate is a digital certificate obtained by encrypting a fifth digital certificate with the third transport key, and the fourth private key is a private key obtained by encrypting a fifth private key corresponding to the fifth digital certificate with the third transport key. The any service TA applies for second identification information from the key management TA via the transmission interface. The any service TA sends the fourth digital certificate, the fourth private key, the third transport key, and the second identification information to the key management TA. The key management TA separately decrypts the fourth digital certificate and the fourth private key with the third transport key to obtain the fifth digital certificate and the fifth private key. The key management TA associatively stores the fifth digital certificate, the fifth private key, and the second identification information. The any service TA stores the second identification information.

In a possible design, the method further includes: The any service TA generates a second password, and stores the second password. The any service TA sends the second password to the key management TA. That the key management TA associatively stores the fifth digital certificate, the fifth private key, and the second identification information associatively includes: The key management TA separately encrypts the fifth digital certificate and the fifth private key with the second password to obtain a sixth digital certificate and a sixth private key, and associatively stores the sixth digital certificate, the sixth private key, and the second identification information.

Based on a same inventive concept as that of the first aspect, an embodiment of this application provides a certificate management apparatus. A trusted execution environment TEE is deployed in the certificate management apparatus. An offline burning interface is further deployed in the certificate management apparatus. A key management trusted application TA is deployed in the TEE. The key management TA is configured to obtain digital rights management DRM parameters via the offline burning interface. The DRM parameters include an address of a first digital certificate, an address of a first private key, and a transport key. The first digital certificate is a digital certificate obtained by encrypting a second digital certificate with the transport key. The first private key is a private key obtained by encrypting a second private key with the transport key. The second private key is used to sign data to be sent to a DRM server, or is used to decrypt data from the DRM server. The key management TA is further configured to: separately obtain the first digital certificate and the first private key based on the address of the first digital certificate and the address of the first private key, and separately decrypt the first digital certificate and the first private key with the transport key to obtain the second digital certificate and the second private key; and associatively store the second digital certificate, the second private key, and first identification information, where the first identification information is used to identify the second digital certificate and the second private key.

In a possible design, the DRM parameters further include a first password. The key management TA is specifically configured to: separately encrypt the second digital certificate and the second private key with the first password to obtain a third digital certificate and a third private key, and associatively store the third digital certificate, the third private key, and the first identification information, where the first identification information is used to identify the third digital certificate and the third private key.

In a possible design, N service TAs and a transmission interface are further deployed in the TEE, where N is a positive integer. A first service TA is configured to: obtain first information, where the first information includes the first identification information, and the first service TA is any one of the N service TAs; and obtain the second digital certificate associated with the first identification information from the key management TA via the transmission interface.

In a possible design, if the DRM parameters further include the first password, the first information further includes the first password. The first service TA is further configured to obtain the second digital certificate from the key management TA via the transmission interface based on the first identification information and the first password.

In a possible design, the first service TA is specifically configured to send a first instruction to the key management TA via the transmission interface, where the first instruction carries the first password and the first identification information. The key management TA is further configured to: obtain the third digital certificate associated with the first identification information from the stored digital certificate; and decrypt the third digital certificate with the first password to obtain the second digital certificate, and send the second digital certificate to the first service TA via the transmission interface.

In a possible design, the first service TA is deployed in the TEE. The first service TA is further configured to send a second instruction to the key management TA, where the second instruction carries first data and the first identification information, and the first service TA is any one of the N service TAs. The key management TA is further configured to: obtain the second private key associated with the first identification information from the stored key, and sign or decrypt the first data with the second private key to obtain second data. The key management TA is further configured to send the second data to the first service TA.

In a possible design, if the DRM parameters further include the first password, the second instruction further includes the first password. The key management TA is specifically configured to: obtain the third private key associated with the first identification information from the stored key, and decrypt the third private key with the first password to obtain the second private key; and sign or decrypt the first data with the second private key to obtain the second data, and send the second data to the first service TA.

In a possible design, the DRM parameters further include at least one of the following: a length of the transport key, a length of the first identification information, a length of the first private key, and a length of the first digital certificate.

In a possible design, the DRM parameters further include a length of the first password.

In a possible design, the offline burning interface is a function interface, and an input variable of the offline burning interface includes any one of the DRM parameters.

In a possible design, the transmission interface is a function interface, and the transmission interface includes at least one of the following: an identification applying interface, a certificate reading/writing interface, a private key signing interface, a private key decryption interface, or an online burning interface, where
an input variable of the identification applying interface is null;
an input variable of the certificate reading/writing interface includes the first identification information or includes the first identification information and the first password;
an input variable of the private key signing interface includes the first identification information and to-be-signed data or includes first identification information, the first password, and the to-be-signed data;
an input variable of the private key decryption interface comprises the first identification information and to-be-decrypted data or comprises the first identification information, the first password, and the to-be-decrypted data; and
an input variable of the online burning interface comprises an encrypted to-be-written digital certificate, an encrypted to-be-written private key, and a transport key used to encrypt the to-be-written digital certificate and the to-be-written private key.

In a possible design, the function interface is an application programming interface API.

In a possible design, the transport key includes a first transport key and a second transport key, the first digital certificate is a digital certificate obtained by encrypting the second digital certificate with the first transport key, and the first private key is a private key obtained by encrypting the second private key with the second transport key; and
the key management TA is specifically configured to decrypt the first digital certificate with the first transport key to obtain the second digital certificate, and decrypt the first private key with the second transport key to obtain the second private key.

In a possible design, the transport key is a key encrypted with a key ladder.

The key management TA is specifically configured to: decrypt the transport key with the key ladder, and separately decrypt the first digital certificate and the first private key with a decrypted transport key to obtain the second digital certificate and the second private key.

In a possible design, a second service TA is deployed in the TEE, and a transmission interface is deployed in the apparatus in which the trusted execution environment TEE is deployed.

The second service TA is configured to receive to-be-written parameters. The to-be-written parameters include a fourth digital certificate, a fourth private key, and a third transport key, the fourth digital certificate is a digital certificate obtained by encrypting a fifth digital certificate with the third transport key, and the fourth private key is a private key obtained by encrypting a fifth private key corresponding to the fifth digital certificate with the third transport key.

The second service TA is further configured to apply for second identification information from the key management TA via the transmission interface. The key management TA is configured to allocate the second identification information for the second service TA, and send the second identification information to the second service TA via the transmission interface.

The second service TA is further configured to send the fourth digital certificate, the fourth private key, the third transport key, and the second identification information to the key management TA.

The key management TA is further configured to: separately decrypt the fourth digital certificate and the fourth private key with the third transport key to obtain the fifth digital certificate and the fifth private key, and associatively store the fifth digital certificate, the fifth private key, and the second identification information.

The second service TA is further configured to store the second identification information.

In a possible design, the second service TA is further configured to generate a second password, store the second password, and send the second password to the key management TA.

The key management TA is specifically configured to: separately encrypt the fifth digital certificate and the fifth private key with the second password to obtain a sixth digital certificate and a sixth private key, and associatively store the sixth digital certificate, the sixth private key, and the second identification information.

According to a fourth aspect, an embodiment of this application provides another certificate management apparatus. A trusted execution environment TEE is deployed in the certificate management apparatus. A key management trusted application TA and N service TAs are deployed in the TEE, where N is a positive integer. A transmission interface is further deployed in the certificate management apparatus. Any service TA of the N service TAs is configured to receive to-be-written parameters, where the to-be-written parameters include a fourth digital certificate, a fourth private key, and a third transport key, the fourth digital certificate is a digital certificate obtained by encrypting a fifth digital certificate with the third transport key, and the fourth private key is a private key obtained by encrypting a fifth private key corresponding to the fifth digital certificate with the third transport key. The any service TA is further configured to apply for second identification information from the key management TA via the transmission interface. The any service TA sends the fourth digital certificate, the fourth private key, the third transport key, and the second identification information to the key management TA. The key management TA is configured to: separately decrypt the fourth digital certificate and the fourth private key with the third transport key to obtain the fifth digital certificate and the fifth private key. The key management TA is further configured to: associatively stores the fifth digital certificate, the fifth private key, and the second identification information. The any service TA stores the second identification information.

In a possible design, the any service TA is further configured to generate a second password, and store the second password. The any service TA is further configured to send the second password to the key management TA. The key management TA is specifically configured to: separately encrypt the fifth digital certificate and the fifth private key with the second password to obtain a sixth digital certificate and a sixth private key, and associatively store the sixth digital certificate, the sixth private key, and the second identification information.

According to a fifth aspect, an embodiment of this application provides a certificate management apparatus. The certificate management apparatus may be a chip. The certificate management apparatus may include a processor. For example, a TEE and an offline burning interface are deployed in the processor, and a key management trusted application TA is deployed in the TEE. A service TA is further deployed in the TEE. The processor invokes software instructions stored in a memory, to implement functions in any one of the method embodiment in the first aspect or the second aspect, and the possible designs of the method embodiments. The memory may be a memory deployed in the certificate management apparatus, or may be a memory deployed outside the certificate management apparatus.

It should be understood that, the TEE, the offline burning interface, and the key management TA may all be software modules, and functions corresponding to the TEE, the offline burning interface, and the key management TA may be implemented by running software code in the memory by the processor.

According to a sixth aspect, an embodiment of this application provides a computer program product, including a computer program. When the computer program is executed on a computer or a processor, the computer or the processor is enabled to implement the function in any one of the method embodiment in the first aspect or the second aspect, and the possible designs of the method embodiments.

According to a seventh aspect, an embodiment of this application provides a computer-readable storage medium, configured to store a program and instructions. When the program and the instructions are invoked and executed on a computer, the computer may be enabled to implement the function in any one of the method embodiment in the first aspect or the second aspect, and the possible designs of the method embodiments.

According to an eighth aspect, an embodiment of this application provides a chip system. The chip system includes a processor, and may further include a memory, configured to implement functions in the foregoing method. The chip system may include a chip, or may include a chip and another discrete device.

### BRIEF DESCRIPTION OF DRAWINGS

FIG. 1 is a schematic diagram of an architecture of a DRM system according to an embodiment of this application;
FIG. 2 is a schematic diagram of an architecture of a PKI system according to an embodiment of this application;
FIG. 3 is a schematic flowchart of managing a content encryption key according to an embodiment of this application;
FIG. 4 is a schematic diagram of a relationship between participants in a process of burning a digital certificate and a private key according to an embodiment of this application;
FIG. 5 is a schematic flowchart of burning a digital certificate and a private key in the conventional technology according to an embodiment of this application;
FIG. 6 is a schematic diagram of a structure of a certificate management apparatus according to an embodiment of this application;
FIG. 7 is a flowchart of a certificate management method according to an embodiment of this application;
FIG. 8 is a flowchart of another certificate management method according to an embodiment of this application;
FIG. 9 is a flowchart of burning a certificate and a private key online according to an embodiment of this application;
FIG. 10 is a schematic flowchart of burning a digital certificate and a private key according to an embodiment of this application;
FIG. 11 is a schematic flowchart of encrypted transmission of a digital certificate and a private key according to an embodiment of this application;
FIG. 12 is a schematic flowchart of offline burning according to an embodiment of this application;
FIG. 13 is a schematic flowchart of reading a digital certificate according to an embodiment of this application;
FIG. 14 is a schematic flowchart of signing a private key according to an embodiment of this application;
FIG. 15 is a schematic flowchart of decrypting a private key according to an embodiment of this application;
FIG. 16 is a schematic flowchart of online burning according to an embodiment of this application; and
FIG. 17 is a schematic diagram of a structure of an apparatus 1700 according to an embodiment of this application.

### DESCRIPTION OF EMBODIMENTS

Before technical solutions provided in this application are described, technical terms involved in embodiments of this application are first explained and described.
(1) Digital rights management (digital rights management, DRM) refers to some technologies used by publishers to control use rights of protected objects. These technologies protect digital content (for example, software, music, and movies) and hardware, and handle restrictions on use of an instance of a digital product.

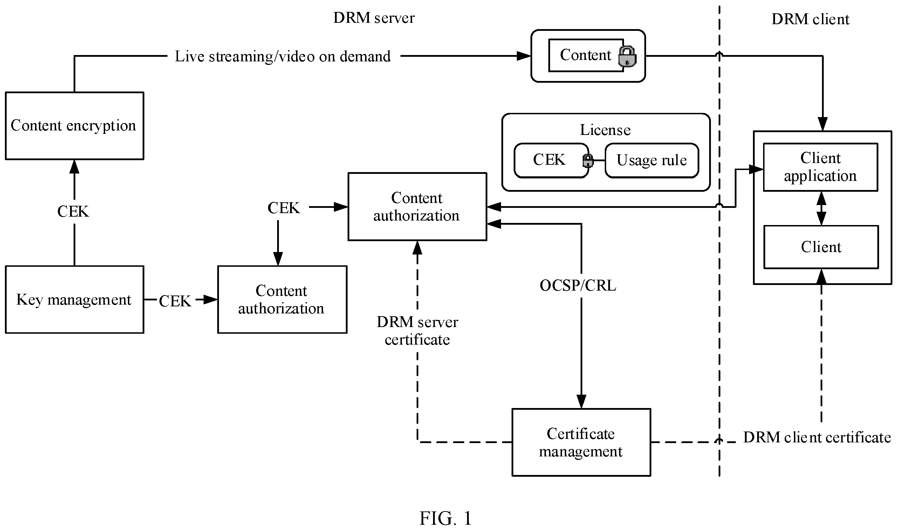

As shown in FIG. 1, an example of a DRM system is provided. The system includes a DRM server and a DRM client. After a trust relationship is established between the DRM server and the DRM client, the DRM server provides digital content for the DRM client. For example, the DRM server may include a content encryption module, a key management module, a key gateway module, a content authorization module, and a certificate management module. The content encryption module encrypts digital content with a content encryption key (content encryption key, CEK) for protection. After receiving the content encryption key, the key management module synchronizes the content encryption key to the key gateway module. After receiving the synchronized content encryption key, the key gateway module confidentially stores the content encryption key, and receives a key query from the content authorization module. The content authorization module receives a request from the DRM client and securely sends a content authorization license including the content encryption key and a key usage rule to an authorized DRM client. After receiving the content authorization license, the DRM client decrypts the content encryption key according to the key usage rule and uses the content encryption key to decrypt the content for play. The certificate management module is configured to manage a DRM server certificate and a DRM client certificate, for example, to revoke a certificate or update a certificate.

Modules of the DRM server and the DRM client establish a trust relationship based on device certificates (the DRM server certificate and the DRM client certificate shown in FIG. 1) issued based on public key infrastructure (public key infrastructure, PKI), and perform secure communication with each other based on the trust relationship. A PKI system may be used to issue and manage certificates. Generally, the PKI system issues the certificate through a certificate authority (certificate authority, CA). In the DRM system, core components of the DRM server and the DRM client each apply to the certificate authority (certificate authority, CA) for a digital certificate as an identity credential. A trust relationship between entities is based on validity of certificates. If the DRM client certificate is verified to be valid by the DRM server, the DRM server trusts the DRM client. Similarly, if the DRM server certificate is verified to be valid by the DRM client, the DRM client trusts the DRM server.

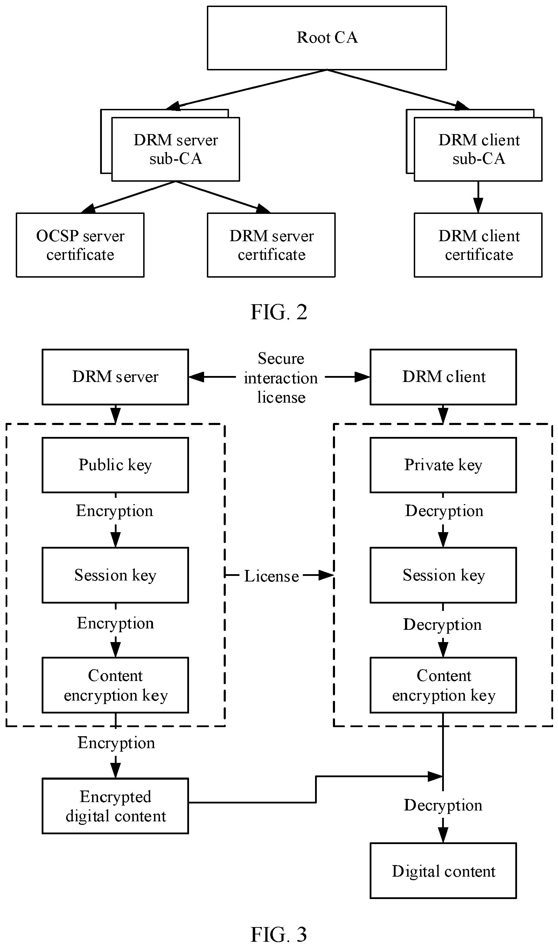

The PKI system may include a CA of one level or a multi-level CA. When the PKI system includes a multi-level CA, for example, the PKI system shown in FIG. 2 includes a root CA, a DRM server sub-CA, and a DRM client sub-CA, the root CA can generate two sub-CA certificates based on a root CA certificate and issue them to the DRM server sub-CA and the DRM client sub-CA separately. The DRM server sub-CA may issue, based on the DRM server sub-CA, a DRM server certificate to a DRM server device, and issue an OCSP server certificate to an online certificate status protocol (online certificate status protocol, OCSP) server. The OCSP server may be configured to perform verification on validity of the DRM server. The DRM client sub-CA can issue the DRM client certificate to the DRM client based on the DRM client sub-CA certificate. The DRM client certificate, the root CA certificate, and the DRM client sub-CA certificate form a client certificate chain. Generally, the certificate chain is stored in secure storage of a client. A device certificate of each level can pass upper-level certificate verification.

When determining whether to trust the DRM client, the DRM server may specifically determine based on a root CA certificate of a digital certificate of the DRM client. If the DRM server trusts a certificate of a root CA, the DRM server can trust a client certificate issued by the root CA. For example, if DRM 1 server trusts a certificate of root CA 1, and DRM 2 client certificate is issued by root CA 1, DRM 1 server trusts DRM 2 client. If DRM 3 server trusts only a certificate of root CA 2 and the DRM 2 client certificate is issued by root CA 1, DRM 3 server cannot trust DRM 2 client.

### (2) Content encryption key

The content encryption key is a key used to encrypt digital content. A DRM server and a DRM client have an asymmetric key pair. A key owned by the DRM server is called a public key, and a key owned by the DRM client is called a private key. The public key is used to encrypt the content encryption key, and the private key is used to decrypt the content encryption key.

Refer to FIG. 3, an example of a schematic flowchart of managing a content encryption key is provided.

A1: A DRM server generates a session key, and encrypts a content encryption key with the session key. The session key is a temporary key generated when the client applies for a license, and the session key is used to perform encryption protection on the content encryption key.

A2: The DRM server encrypts the session key with a public key of a DRM client.

A3: The DRM server encapsulates an encrypted session key and an encrypted content encryption key into a license and sends the license to the DRM client.

A4: After receiving the license, the DRM client decrypts the session key with a private key of the DRM client, and obtains the content encryption key through decryption with a decrypted session key.

A5: After obtaining the content encryption key through decryption, the DRM client decrypts digital content with the content encryption key, to decode and play the content.

(3) A key ladder (Keyladder) technology supports writing a key in a production phase in chip logic. The key may be referred to as a key ladder. The key ladder is used only in a key ladder module of a chip. Data encrypted with the key ladder is decrypted only by the key ladder module of the chip, to ensure data security.

(4) A rich execution environment (rich execution environment, REE) may be used to run a general-purpose operating system, for example, an Android (Android) operating system, an iOS operating system, and a Linux operating system, to provide software and hardware support for implementing application functions.

A trusted execution environment (trusted execution environment, TEE) provides a secure area on a terminal device to support storage, processing, and protection of sensitive data (such as keys and digital certificates) in an isolated and trusted environment.

(5) A trust application (trust applet, TA) is an application entity that can run in the TEE. Memories, secure storage, and other hardware resources of different TAs are isolated from each other.

### (6) Security level of a DRM client

For example, DRM clients in China can be classified into three security levels: a software level, a hardware level, and an enhanced hardware level. The software level allows a DRM client application to run in a common operating system, and other software in the system can access various keys and data of DRM. The hardware level requires the DRM client to run in an independent TEE, and other system software cannot access keys or data of the DRM. The enhanced hardware level further upgrades attack defense requirements of a chip algorithm engine.

(7) In the embodiments of this application, the "key" may also be referred to as a "secret key". "At least one" means one or more, and "a plurality of' means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally represents an "or" relationship between the associated objects. "At least one of the following" or a similar expression thereof indicates any combination of the following, and includes any combination of one or more of the following. For example, at least one of a, b, and c may indicate a, b, c, a and b, a and c, b and c, or a, b, and c, where a, b, and c may be singular or plural. In addition, it should be understood that in the descriptions of this application, words such as "first" and "second" are merely used for distinguished descriptions, and cannot be understood as an indication or implication of relative importance, and cannot be understood as an indication or implication of a sequence. Numerals used in the embodiments of this application are merely used for differentiation for ease of description, but do not limit the scope of the embodiments of this application. The sequence numbers of the foregoing processes do not mean an execution sequence, and the execution sequence of the processes should be determined according to functions and internal logic of the processes.

(8) The terminal device in the embodiments of this application may also be referred to as terminal equipment (terminal equipment), user equipment (user equipment, UE), or the like. For example, a terminal may be a set top box, a mobile phone, a tablet computer (pad), a laptop, a personal digital assistant (personal digital assistant, PDA), a point of sales (point of sales, POS), a vehicle-mounted computer, a smart speaker, an augmented reality (augmented reality, AR) device, a virtual reality (virtual reality, VR) device, a smart car, or the like. This is not limited in this embodiment of this application. In addition, the terminal device in the embodiments of this application may support one or more client applications.

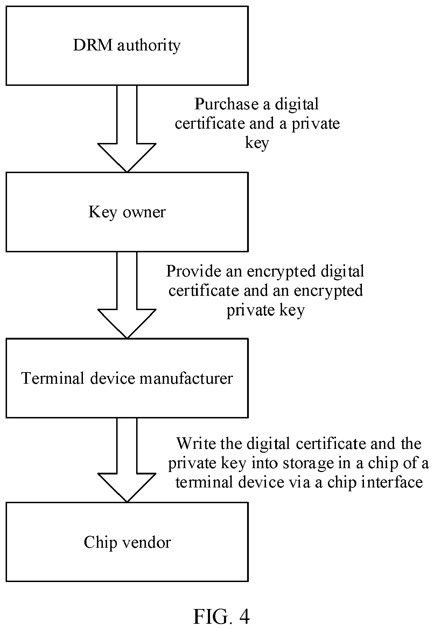

A DRM server authorizes DRM clients in the terminal device to access digital content of different quality based on different security levels. For example, Hollywood content providers require that a terminal device support a hardware security level or a higher security level for 4K programs. A hardware security level or a higher security level of a DRM client requires that a digital certificate and a private key of the DRM client be burnt before delivery. In a process from generating a digital certificate and a private key to burning the digital certificate and the private key to a chip of the terminal device, participants may include a DRM authority, a key owner, a terminal device manufacturer, and a chip vendor. For example, the DRM authority may be China DRM Trust Authority (China DRM trust authority, CDTA), and the key owner may be an operator or an Internet service provider (over the top, OTT). FIG. 4 is a schematic flowchart from generating a digital certificate and a private key to burning the digital certificate and the private key to a chip of a terminal device.

A DRM authority uses a derivation rule to derive a terminal device digital certificate (digital certificate for short) and generate a private key. A key owner purchases a terminal device certificate and the private key from the DRM authority and stores the terminal device certificate and the private key on a running platform of the key owner, for example, an operator platform or an OTT server. The operator platform or OTT server uses a common tool to encrypt the terminal device certificate and the private key, and deliver an encrypted terminal device certificate and an encrypted private key to a terminal device manufacturer. Therefore, the terminal device manufacturer assists a DRM client in writing the digital certificate and the private key on a platform (referred to as a terminal device manufacturer platform) for burning the digital certificate and the private key. The terminal device manufacturer platform writes the digital certificate and the private key to secure storage of the chip via a chip interface provided by the terminal device. In addition, the platform mentioned in the embodiments of this application may be a server, an electronic device, and the like.

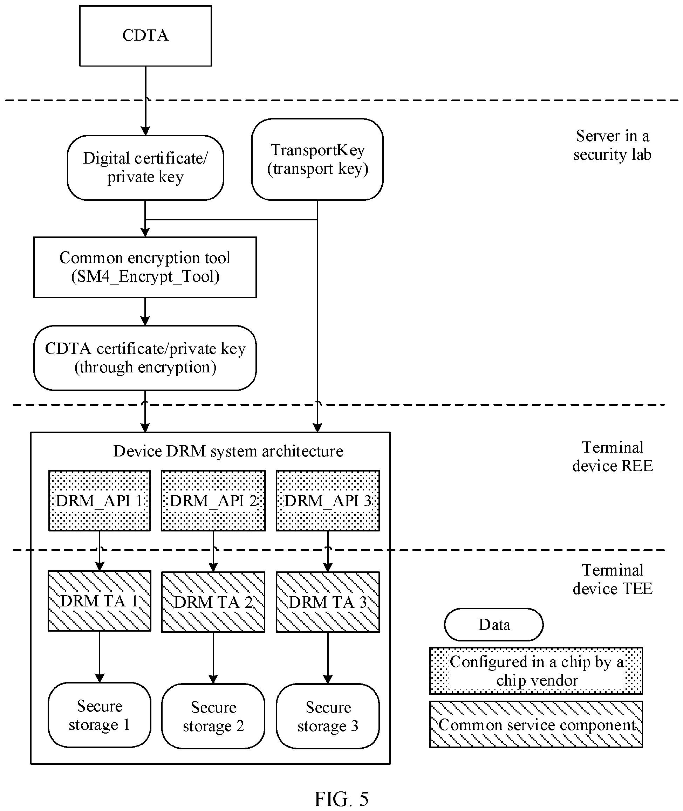

Specifically, an example in which the DRM authority is CDTA is used in FIG. 5, which is a specific schematic flowchart from generating a digital certificate and a private key to burning the digital certificate and the private key to a chip of a terminal device.

The digital certificate and the private key of the terminal device are issued and derived by CDTA according to a preset rule based on a CDTA root CA certificate. Then, CDTA securely sends the digital certificate and the private key of the terminal device to a running platform of a key owner. The running platform of the key owner is in a secure environment, for example, a security lab. The running platform of the key owner in the security lab generates a transport key (TransportKey), and encrypts the digital certificate and the private key of the terminal device with the transport key. For example, the digital certificate and the private key of the terminal device may be encrypted by using a universal encryption tool and a fixed encryption mode. After the foregoing steps are completed, the key owner provides an encrypted digital certificate and an encrypted private key of the terminal device and a plaintext TransportKey for a terminal device manufacturer. On a terminal device manufacturer platform, the terminal device manufacturer writes parameters provided by the key owner to different TAs in a terminal device TEE, for example, a DRM TA 1, a DRM TA 2, and a DRM TA 3 shown in FIG. 5, via API interfaces (for example, a DRM API 1, a DRM API 2, and a DRM API 3) corresponding to different DRM clients in the terminal device. In this embodiment, each DRM TA may be considered as a client. A client may be used by one or more client applications. Each DRM TA processes data related to the client application and writes and reads digital certificates and private keys. DRM TAs are independent of each other. One DRM TA cannot obtain a digital certificate or a private key stored in another DRM TA. Even if different DRM clients use a same root CA certificate, the DRM clients cannot share one digital certificate or a private key. In the foregoing solution, one DRM client corresponds to one DRM server. Therefore, a DRM server that provides digital content cannot use a digital certificate and a private key of a DRM client corresponding to another DRM server. Based on this, before delivery, a terminal device needs to be burnt with digital certificates and private keys of different DRM clients. After delivery of the terminal device, DRM TAs (clients) running on a TEE side are already determined, and cannot be added or updated, so that the terminal device may not be able to run digital content provided by some DRM servers.

Based on this, the embodiments of this application provide a certificate management method and apparatus. Specifically, a function of processing data related to a client application and a function of writing/reading a digital certificate/private key are implemented by using different modules. In this embodiment of this application, a functional module configured to write and store a digital certificate and a private key is referred to as a key management TA, and a functional module configured to process data related to a client application is referred to as a service TA. The key management TA writes and stores digital certificates and private keys of different clients. Different clients correspond to different service TAs. In other words, the key management TA supports access of a plurality of service TAs. The key management TAassociatively stores a digital certificate and a private key of each different client by using different identification information. In the embodiments of this application, a key management TA is added to a chip, and an offline burning interface is defined. The key management TA receives and stores, via the offline burning interface, digital rights management DRM parameters written by an external environment. When a service TA subsequently needs to use the parameters, the service TA obtains the parameters from the key management TA. Therefore, storing (by the key management TA) and using (by the service TA) of a digital certificate and a private key of a DRM service are separate. The service TA is responsible for only service functions, and can obtain the private key and certificate only via a TEE interface provided by the key management TA, which ensures privacy of the digital certificate and the private key. Further, one management TA supports access of a plurality of service TAs, and further supports adding and updating of service TAs.

For associatively storing a digital certificate and a private key, the first manner is to store the digital certificate and the private key through encryption, and a key used for encryption is a password (or referred to as a cipher), so that different service TAs can read the certificate and the private key from the key management TA by using identification information and the password. Security of the digital certificate and the private key can be further ensured. The second manner is to directly store the digital certificate and the private key without encryption.

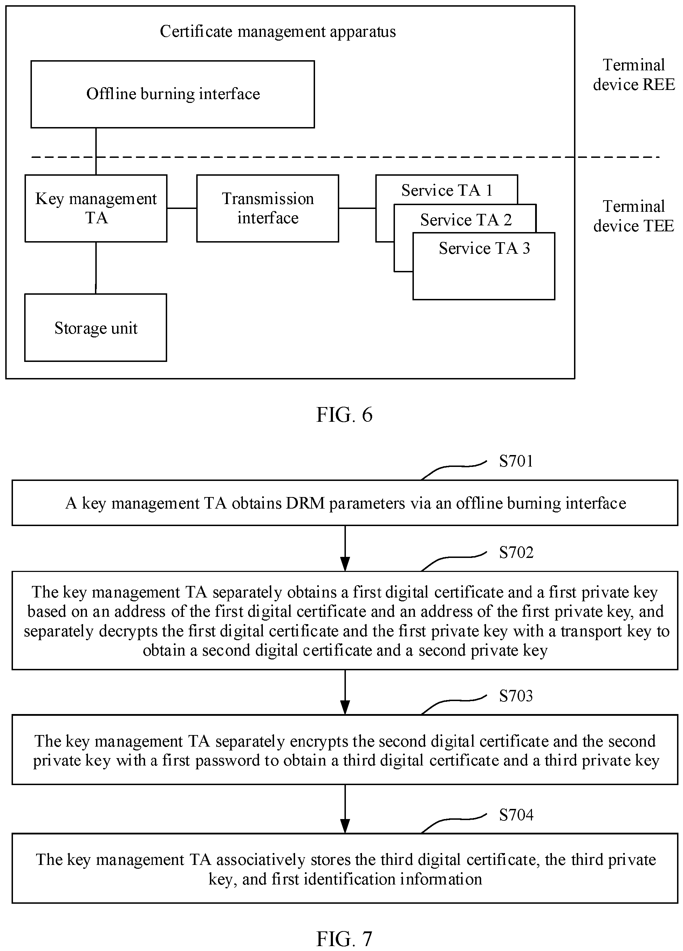

The following describes in detail the solutions provided in the embodiments of this application with reference to the accompanying drawings. FIG. 6 is a schematic diagram of a structure of a certificate management apparatus according to an embodiment of this application. The certificate management apparatus may be a chip, a terminal device, a DRM client deployed in a terminal device, or a module of a DRM client deployed in a terminal device. A function of the DRM client may be implemented by a chip or a chip system of a terminal device. A TEE may be deployed in the certificate management apparatus. A key management TA may be deployed in the TEE. A storage unit may further be deployed in the TEE, which may be configured to store a private key, a digital certificate, and the like. The storage unit is a non-volatile storage medium, such as a flash memory (flash), a read-only memory (Read-Only Memory, ROM), a programmable read-only memory (programmable ROM, PROM), an erasable programmable read-only memory (erasable PROM, EPROM), an electrically erasable programmable read-only memory (electrically erasable EPROM, EEPROM), a register, a hard disk, a removable hard disk, a CD-ROM, or a storage medium of any other form well known in the art.

N service TAs may be further deployed in the TEE, an example of a first service TA, a second service TA, and a third service TA is used in FIG. 6, and N is a positive integer. An offline burning interface is further deployed in the certificate management apparatus. The offline burning interface may be deployed in the TEE. If an REE is further deployed in the certificate management apparatus, the offline burning interface may alternatively be deployed in the REE. In FIG. 6, an example in which the offline burning interface is deployed in the REE is used. A transmission interface may be further deployed in the TEE, so that each service TA reads a digital certificate from the key management TA and uses a private key.

The certificate management apparatus performs the certificate management method provided in the embodiments of this application to implement offline burning of a digital certificate and a private key, reading of the digital certificate and the private key, or online burning of the digital certificate and the private key.

FIG. 7 is a schematic flowchart of a certificate management method according to an embodiment of this application. FIG. 7 describes the first manner. FIG. 7 specifically provides a process of offline burning (which may also be referred to as platform burning) of a digital certificate and a private key. The burning process may be performed on a platform of a terminal device manufacturer.

S701: A key management TA obtains DRM parameters via an offline burning interface. The DRM parameters include an address of a first digital certificate, an address of a first private key, a transport key, and a first password. The first digital certificate is a digital certificate obtained by encrypting a second digital certificate with the transport key. The first private key is a private key obtained by encrypting a second private key with the transport key. The first digital certificate, namely, a DRM client certificate, is used to perform verification on validity of a certificate management apparatus. The first private key is used to encrypt and decrypt data of a DRM server.

The offline burning interface may be a function interface. The function interface may be an application programming interface (application programming interface, API), or may be an interface of another type. An input variable of the offline burning interface may include any one of the DRM parameters. For example, the DRM parameters further include at least one of the following: a length of the transport key, a length of first identification information, a length of the first password, a length of the first private key, or a length of the first digital certificate. For example, the offline burning interface may be defined in the following manner:
Int CDRM_KEY_Provision (unsigned char^{∗} pTransportKey, int s32TransportKeyLen, unsigned char^{∗} pInfor, int s32Inforlen, unsigned char^{∗} pPrivateKey, int s32privateKeyLen, unsigned char^{∗} pCert, int s32CertLen) parameter.
Int CDRM KEY Provision indicates a name of an invoked function corresponding to the offline burning interface. It should be understood that the offline burning interface is used by invoking the function.
pTransportKey indicates a transport key (TransportKey) obtained through encryption with the assistance of a chip vendor.
s32TransportKeyLen indicates a length of TransportKey.
pInfor indicates a password (passwd) for encrypting and storing a digital certificate and a private key, where in the embodiment shown in FIG. 7, pInfor indicates the first password.
s32Inforlen indicates a length of pInfor, that is, the length of the first identification information.
pPrivateKey indicates a private key address obtained through encryption with TransportKey, that is, the address of the first private key.
s32privateKeyLen indicates a length of an encrypted private key, that is, the length of the first private key.
pCert indicates a digital certificate address obtained through encryption with TransportKey, that is, the address of the first digital certificate.
s32CertLen indicates a length of an encrypted digital certificate.

For example, if the function of the offline burning interface is successfully invoked, the function of the offline burning interface may return a first value, for example, 0. When another value is returned, it indicates that invoking of the function of the offline burning interface fails. For example, the encrypted private key address and the encrypted digital certificate address may be provided by an operator.

Specifically, the DRM parameters are transmitted to the key management TA by using a terminal device manufacturer platform. Correspondingly, the key management TA obtains the DRM parameters. In the first manner, the DRM parameters may be written into the certificate management apparatus via a function interface by using the terminal device manufacturer platform. The certificate management apparatus is, for example, a processor chip.

S702: The key management TA separately obtains the first digital certificate and the first private key based on the address of the first digital certificate and the address of the first private key, and separately decrypts the first digital certificate and the first private key with the transport key to obtain the second digital certificate and the second private key.

S703: The key management TA separately encrypts the second digital certificate and the second private key with the first password to obtain a third digital certificate and a third private key.

S704: The key management TA associatively stores the third digital certificate, the third private key, and the first identification information. The first identification information is used to identify the third digital certificate and the third private key.

For example, the first identification information may be determined in the following manner.

Manner 1: The DRM parameters received via the offline burning interface includes the first identification information.

Manner 2: A plurality of pieces of identification information are configured in the key management TA in advance, and the key management TA allocates one piece of unused identification information from the configured plurality of pieces of identification information.

Manner 3: A default value of identification information is configured in the key management TA, an input parameter of the offline burning interface does not include identification information, and the key management TA uses the default value as the first identification information.

After the key management TA associatively stores the third digital certificate, the third private key, and the first identification information, an association relationship is established between the third digital certificate, the third private key, and the first identification information. In this case, the first identification information is used to identify the third digital certificate and the third private key. Therefore, the third digital certificate and the third private key may be found by using the first identification information.

In an example, the key management TA may receive a plurality of groups of DRM parameters, and each group of DRM parameters corresponds to one digital certificate and one private key, so that a plurality of groups of digital certificates and the private key are burnt in the terminal device once. Different digital certificates and private keys are identified by using different identification information. In another example, a plurality of groups of to-be-burnt digital certificates and private keys may be further implemented by performing the procedure shown in FIG. 7 for a plurality of times.

After burning the first digital certificate and the first private key to the terminal device in the foregoing manner, N service TAs in the terminal device may obtain the second digital certificate from the key management TA by obtaining the first identification information and the first password. In addition, when the second private key needs to be used to decrypt or sign digital content, decryption or signing of the digital content may be implemented by the key management TA, and decrypted or signed digital content is returned. In this solution, a same digital certificate and private key may be used for different service TAs, or different digital certificates and private keys may be used. In both ways, the digital certificate and the key are obtained by a unified key management TA. In addition, each service TA cannot actually read the first private key. This ensures privacy of the private key, and improves security. For example, the N service TAs communicate with the key management TA via a transmission interface. The transmission interface may also be a function interface, and the transmission interface is deployed in the TEE. For example, the transmission interface may include at least one of the following: an identification applying interface, a certificate reading interface, a private key signing interface, a private key decryption interface, or an online provision interface. The identification applying interface is used by the service TA to apply for identification information used to store a private key and digital certificate. The certificate reading interface is used by the service TA to obtain digital certificate data. The private key signing interface is used by the service TA to use a private key to sign data. The private key decryption interface is used by the service TA to send to-be-decrypted data to the key management TA and receive data decrypted by the key management TA with a private key. During burning a private key and digital certificate of a DRM client online, the online provision interface is used by the service TA, and the key management TA securely stores the key and digital certificate of the DRM client.

In an example, the first service TA in the N service TAs reads the second digital certificate. The first service TA obtains first information, where the first information includes the first identification information and the first password. The first service TA obtains, from the key management TA via the transmission interface, the second digital certificate associated with the first identification information. Specifically, the first service TA transfers the first information to the key management TA via the certificate reading interface, so that the key management TA obtains, from the stored digital certificate, the third digital certificate associated with the first identification information, decrypts the third digital certificate with the first password to obtain the second digital certificate, and then sends the second digital certificate to the first service TA via the certificate reading interface.

For example, an input variable of the certificate reading interface may include the first identification information and the first password, or may include the first identification information. In the first manner where the digital certificate and the private key are stored through encryption, the input variable of the certificate reading interface may include the first identification information and the first password; and in the second manner where the digital certificate and the private key are stored without encryption, the input variable of the certificate reading interface may include only the first identification information. The input variable of the certificate reading interface may further include the length of the first identification information or the length of the first password. An output variable of the certificate reading interface may include the second digital certificate, and may further include a length of the second digital certificate.

The first manner is used as an example. The certificate reading interface may be defined in the following manner:
int CDRM_Key_GetCert (unsigned int keylndex, unsigned char^{∗} pPasswd, int s32Passlen, unsigned char^{∗} pCert, int^{∗} pCertLen).
int CDRM_Key_GetCert indicates an invoked function of the certificate reading interface.
keyIndex is an input parameter, and indicates identification information used to identify a digital certificate and a private key. In the embodiment shown in FIG. 7, keyIndex indicates the first identification information, keyIndex is stored in secure storage 2 in the first service TA, and is transferred when keyIndex needs to be used.
pPasswd is an input parameter, and indicates a password used to encrypt a digital certificate and a private key in the key management TA. In the embodiment shown in FIG. 7, pPasswd indicates the first password. pPasswd is stored in the secure storage 2 in the first service TA, and is transferred when pPasswd needs to be used.
s32Passlen is an input parameter, and indicates a length of Passwd.
pCert is an output parameter, and indicates read digital certificate data, that is, the second digital certificate.
pCertLen is an output parameter, and indicates a length of a read certificate, that is, the length of the second digital certificate.

For example, if the function of the certificate reading interface is successfully invoked, the function of the certificate reading interface may return a second value, for example, 0. When another value is returned, it indicates that invoking of the function of the certificate reading interface fails.

The first identification information and the first password are from a key owner. After determining the first identification information and the first password, the key owner notifies the terminal device manufacturer of the first identification information and the first password in an offline manner or a pretty good privacy (pretty good privacy, PGP)-encrypted email manner. Therefore, the terminal device manufacturer may send the first identification information and the first password to the first service TA by using the terminal device manufacturer platform, and the first service TA may store the first identification information and the first password in the secure storage 2 corresponding to the first service TA. PGP is an encryption and decryption technology for communication through emails. This technology can ensure data security between two parties in data exchange. Even if network sniffing or other hacker technologies exist on a shared network, data transmitted by using the PGP technology cannot be obtained through the network sniffing or other hacker technologies.

Therefore, when obtaining the first information, the first service TA can read the first identification information and the first password from the secure storage 2. The first service TA may read the second digital certificate from the key management TA in a case in which validity verification is performed between the DRM server and the DRM client. The DRM server requests the second digital certificate from the DRM client. After a DRM client application obtains the request, the first service TA reads the second digital certificate from the key management TA. After receiving the second digital certificate sent by the key management TA, the first service TA may perform verification on the second digital certificate based on a preconfigured certificate rule, for example, perform verification on whether a format of the second digital certificate meets a requirement. After verification succeeds, the second digital certificate is sent to the DRM server, and the DRM server performs verification on validity of the second digital certificate. This prevents the service TA from obtaining incorrect identification information and an incorrect password and obtaining an incorrect digital certificate.

In another example, a first service TA in the N service TAs obtains data signed by a private key. The first service TA sends a second instruction to the key management TA via the private key signing interface in the transmission interface, where the second instruction carries first data, the first identification information, and the first password. The key management TA obtains the third private key associated with the first identification information from a stored key, and decrypts the third private key with the first password to obtain the second private key. The key management TA signs the first data with the second private key to obtain second data, and sends the second data to the first service TA via the private key signing interface in the transmission interface.

For example, the input variable of the private key signing interface includes the first identification information and to-be-signed data or includes the first identification information, the first password, and the to-be-signed data. When the first manner where the digital certificate and the private key are stored through encryption is used, the input variable of the private key signing interface includes the first identification information, the first password, and to-be-signed data (for example, the first data). When the second manner where the digital certificate and the private key are stored without encryption is used, the input variable of the private key signing interface includes the first identification information and to-be-signed data. The input variable of the private key signing interface may further include the length of the first identification information, the length of the first password, or a length of to-be-signed data. An output variable of the private key decryption interface includes signed data, and may further include a length of the signed data.

The first manner is used as an example. The private key signing interface may be defined in the following manner:
int CDRM_Key_PrivateKey_Signature (unsigned int keyIndex, CDRM KEY Algorithm alg, unsigned char^{∗} pPasswd, int s32Passlen, unsigned char^{∗} pInputBuffer, int len, unsigned char^{∗} pOutPutBuffer, int^{∗} pBufferLen).
int CDRM_Key_PrivateKey_Signature indicates an invoked function of the private key signature interface.
keyIndex is an input parameter, and indicates identification information used to identify a digital certificate and a private key. In the embodiment shown in FIG. 7, keyIndex indicates the first identification information. keyIndex is stored in the secure storage 2 in a storage unit in the first service TA, and is transferred when keyIndex needs to be used.
alg is an input parameter, and alg is an algorithm used to sign to-be-signed data with a private key, for example, may be a standard asymmetric cryptographic algorithm such as SM2-256 or RSA2048.
pPasswd is an input parameter, and indicates a password used to encrypt a digital certificate and a private key in the key management TA.
s32Passlen is an input parameter, and indicates a length of Passwd.
pInputBuffer is an input parameter, and indicates to-be-signed data.
len is an input parameter, and indicates a length of the to-be-signed data.
pOutPutBuffer is an output parameter, and indicates an address of signed data.
pBufferLen is an output parameter, and indicates a length of the signed data.

For example, if the function of the private key signing interface is successfully invoked, the function of the private key signing interface may return a third value, for example, 0. When another value is returned, it indicates that invoking of the function of the private key signing interface fails.

In still another example, the first service TA in the N service TAs needs the second private key to decrypt data. The first service TA sends the second instruction to the key management TA via the private key decryption interface in the transmission interface, where the second instruction carries the first data, the first identification information, and the first password. The key management TA obtains the third private key associated with the first identification information from a stored key, and decrypts the third private key with the first password to obtain the second private key. The key management TA decrypts the first data with the second private key to obtain the second data, and sends the second data to the first service TA via the private key decryption interface in the transmission interface.

For example, an input variable of the private key decryption interface includes the first identification information and to-be-decrypted data or includes the first identification information, the first password, and the to-be-decrypted data. When the first manner where the digital certificate and the private key are stored through encryption is used, the input variable of the private key decryption interface includes the first identification information, the first password, and the to-be-decrypted data (for example, the first data). When the second manner where the stored digital certificate and private key are without encryption is used, the input variable of the private key decryption interface includes the first identification information and the to-be-decrypted data. The input variable of the private key decryption interface may further include the length of the first identification information, the length of the first password, or a length of to-be-decrypted data. An output variable of the private key decryption interface includes decrypted data, and may further include a length of the decrypted data.

The first manner is used as an example. The private key decryption interface may be defined in the following manner:
int CDRM_Key_PrivateKey_Decrypt (unsigned int keyIndex, CDRM_KEY_Algorithm alg, unsigned char^{∗} pPasswd, int s32Passlen, unsigned char^{∗} pInputBuffer, int inLen, unsigned char^{∗} pOutPutBuffer, int^{∗} pBufferLen).
int CDRM Key PrivateKey_Decrypt indicates a name of an invoked function of the private key decryption interface. It should be understood that the private key decryption interface is used by invoking the function.
keyIndex is an input parameter, and indicates identification information used to identify a digital certificate and a private key. In the embodiment shown in FIG. 7, keyIndex indicates the first identification information.
alg is an input parameter, and indicates a parameter used to decrypt to-be-decrypted data with a private key, for example, may be a symmetric key algorithm, for example, SM2-256 or RSA2048.
pPasswd is an input parameter, and indicates a password used to encrypt a digital certificate and a private key in the key management TA.
s32Passlen is an input parameter, and indicates a length of Passwd.
pInputBuffer is an input parameter, and indicates to-be-decrypted data.
len is an input parameter, and indicates a length of the to-be-decrypted data.
pOutPutBuffer is an output parameter, and indicates an address of signed data.
pBufferLen is an output parameter, and indicates a length of the signed data.

For example, if the function of the private key decryption interface is successfully invoked, the function of the private key signing interface may return a fourth value, for example, 0. When another value is returned, it indicates that invoking of the function of the private key decryption interface fails.

It should be understood that an input parameter of each transmission interface is a parameter that needs to be input when the API is invoked, and an output parameter is a parameter obtained after the invocation ends.

In an example, the first service TA may decrypt or sign data from the key management TA based on the second private key in a case in which the DRM client requests the DRM server to play digital content. The DRM client requests a content license from the DRM server. After receiving the request from the DRM client, the DRM server sends a first CEK and a content usage rule to form the content license and send the content license to the DRM client, where the first CEK is obtained by encrypting a second CEK with the second private key. After receiving the content license, a client application of the DRM client needs to decrypt the CEK in the content license. In this case, the client application needs to obtain the second private key from the key management TA via the first service TA, to decrypt the CEK. Specifically, the first service TA sends the second instruction to the key management TA, where the second instruction carries the first CEK, the first identification information, and the first password. The key management TA obtains the third private key associated with the first identification information from a stored key, and decrypts the third private key with the first password to obtain the second private key. The key management TA decrypts the first CEK with the second private key to obtain the second CEK, and sends the second CEK to the first service TA. Therefore, after receiving the second CEK, the first service TA transfers the second CEK to the client application, so that encrypted digital content from the DRM server is decrypted and played.

In a possible implementation, the transport key used to encrypt the second digital certificate may be the same as or different from the transport key used to encrypt the second private key. For example, the transport key used to encrypt the second digital certificate and the second private key includes a first transport key and a second transport key. The first digital certificate is a digital certificate obtained by encrypting the second digital certificate with the first transport key, and the first private key is a private key obtained by encrypting the second private key with the second transport key. That the key management TA performs S702 is specifically: decrypting the first digital certificate with the first transport key to obtain the second digital certificate, and decrypting the first private key with the second transport key to obtain the second private key.

It should be noted that encryption of the second digital certificate and the second private key may be implemented by the key owner by using a server in the security lab. To improve security of the digital certificate and the private key, the transport key used to encrypt the second digital certificate and the second private key may be encrypted and then transferred by the key owner to the terminal device manufacturer. Encryption of the transport key may be implemented by a chip vendor, and specifically, may be implemented by using a key ladder (keyladder) technology by a server deployed in a security lab of the chip vendor. A key used to encrypt the transport key is a key ladder. The key ladder may be configured in a chip of a terminal device by the chip vendor before delivery, for example, may be configured in a one time programmable (one time programmable, OTP) memory of the chip. In this case, that the key management TA separately encrypts the first digital certificate and the first private key with the transport key to obtain the second digital certificate and the second private key may be implemented by using the following manner: The key management TA decrypts the transport key with the key ladder, and separately decrypts the first digital certificate and the first private key with a decrypted transport key to obtain the second digital certificate and the second private key.

In another possible implementation, to improve security of the first password, the first password received by the key management TA may be an encrypted password. After determining the first password, the key owner encrypts the first password, and then notifies the terminal device manufacturer of an encrypted first password. Then, the terminal device manufacturer platform includes the encrypted first password in the DRM parameters and sends the DRM parameters to the key management TA via the offline burning interface. The first password may be encrypted with the transport key. Before separately encrypting the second digital certificate and the second private key with the first password, the key management TA decrypts the encrypted first password with the transport key. Then the key management TA encrypts the second digital certificate and the second private key separately with the first password obtained through decryption.

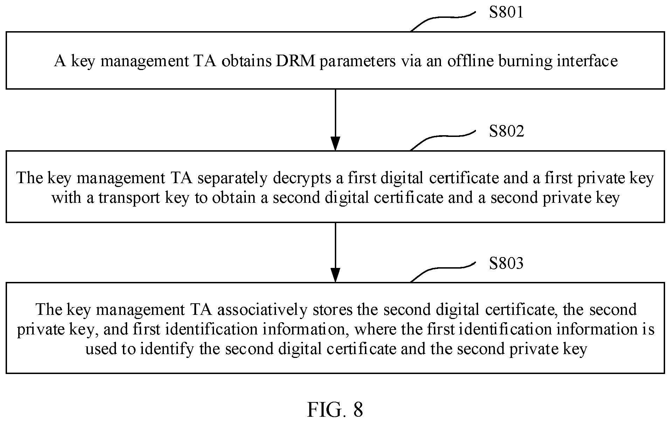

FIG. 8 is a schematic flowchart of another certificate management method according to an embodiment of this application. FIG. 8 describes the second manner. FIG. 8 specifically provides a burning process of a digital certificate and a private key. The burning process may be performed on a platform of a terminal device manufacturer.

S801: A key management TA obtains DRM parameters via an offline burning interface. The DRM parameters include a first digital certificate, a first private key, a transport key, and first identification information. The first digital certificate is a digital certificate obtained by encrypting a second digital certificate with the transport key. The first private key is a private key obtained through encrypting a second private key with the transport key. The first digital certificate is used to perform verification on validity of an apparatus on which a trusted execution environment TEE is deployed. The second private key is used to encrypt and decrypt digital content.

The DRM parameters further include at least one of the following: a length of the transport key, a length of the first identification information, a length of the first private key, a length of the first digital certificate, a data address of the first digital certificate, and a data address of the first private key.

S802: The key management TA separately decrypts the first digital certificate and the first private key with the transport key to obtain the second digital certificate and the second private key.

S803: The key management TA associatively stores the second digital certificate, the second private key, and the first identification information. The first identification information is used to identify the second digital certificate and the second private key.

For detailed descriptions of the offline burning interface, the first identification information, and the transport key, refer to descriptions in the embodiment corresponding to FIG. 7. Details are not described herein again.

In an example, a first service TA in N service TAs reads the second digital certificate. The first service TA obtains first information, where the first information includes the first identification information. The first service TA obtains the second digital certificate associated with the first identification information from the key management TA via a transmission interface. For a manner of obtaining the first identification information, refer to descriptions in the embodiment corresponding to FIG. 7. Details are not described herein again.

In another example, a first service TA reads the second private key. The first service TA sends a second instruction to the key management TA, where the second instruction carries first data and the first identification information. The key management TA obtains the second private key associated with the first identification information from a stored key, and signs or decrypts the first data with the second private key to obtain second data. The key management TA sends the second data to the first service TA.

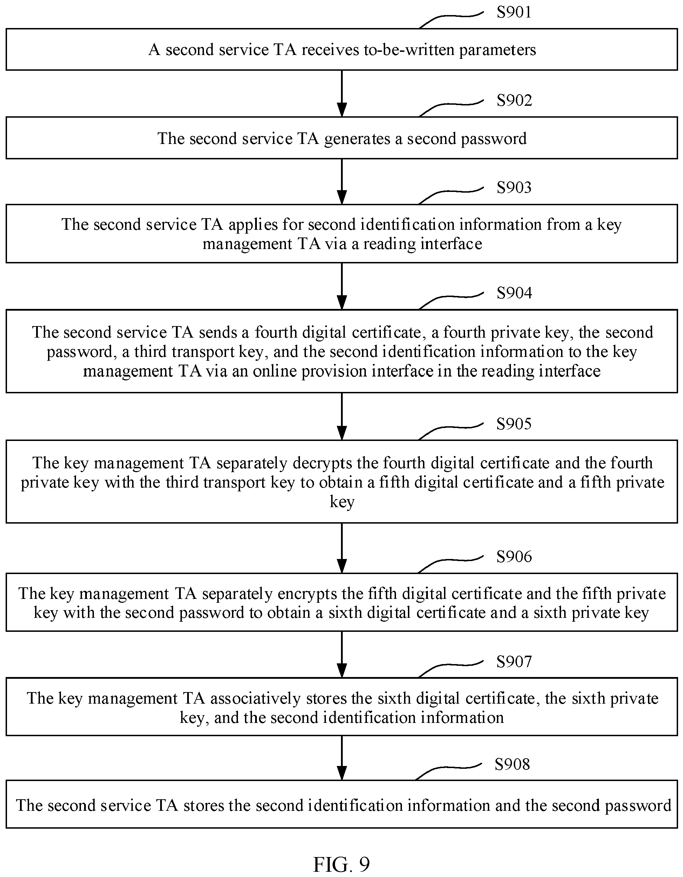

FIG. 9 is a schematic flowchart of a method for burning a digital certificate and a private key online according to an embodiment of this application. Online burning can be used to update an original burnt digital certificate and private key or burn a new digital certificate and private key. The new digital certificate and a digital certificate already burnt can be derived from different root CA certificates. A digital certificate and a private key burnt online can be applied to original N service TAs deployed in a TEE. In addition, on the basis of the original N service TAs, a new service TA may be further added. The digital certificate and the private key that are burnt online may be burnt for the new service TA. In the following, a second service TA is used as an example. The second service TA may be one of the N service TAs, or may be a newly added service TA. It should be noted that, in a case in which the newly added service TA obtains identification information and a password that correspond to an original burnt digital certificate and private key, the newly added service TA may use the original burnt digital certificate and private key to communicate with a DRM server corresponding to the newly added service TA. Certainly, a prerequisite for communication is that the newly added service TA has been trusted by the DRM server.

A service interface corresponding to each service TA may be further deployed in the REE, so that the service TA uses the service interface to process data related to a client application. The service interface may be used as an input interface for writing a digital certificate and a private key online.

In FIG. 9, for example, the key management TA uses a password to encrypt a digital certificate and a private key during storing of the digital certificate and the private key. The online burning method includes the following steps.

S901: The second service TA receives to-be-written parameters, where the to-be-written parameters include a fourth digital certificate, a fourth private key, and a third transport key. The fourth digital certificate is a digital certificate obtained by encrypting a fifth digital certificate with the third transport key. The fourth private key is a private key obtained by encrypting a fifth private key corresponding to the fifth digital certificate with the third transport key.

S902: The second service TA generates a second password. For example, the second password may be generated randomly, or the second password may be generated according to a predefined generation rule.

S903: The second service TA applies for second identification information from the key management TA via the transmission interface.

S904: The second service TA sends the fourth digital certificate, the fourth private key, the second password, the third transport key, and the second identification information to the key management TA via an online provision interface in the transmission interface.

S905: The key management TA separately decrypts the fourth digital certificate and the fourth private key with the third transport key to obtain the fifth digital certificate and the fifth private key.

S906: The key management TA separately encrypts the fifth digital certificate and the fifth private key with the second password to obtain a sixth digital certificate and a sixth private key.

S907: The key management TA associatively stores the sixth digital certificate, the sixth private key, and the second identification information.

S908: The second service TA stores the second identification information and the second password, so that when the digital certificate and the private key are needed subsequently, the second identification information and the second password can be read and used.

In an example, when the key management TA stores the digital certificate and the private key, and does not encrypt the digital certificate and the private key with the password, S903 and S905 are not performed. During performing of S906, the second identification information allocated by the key management TA is used to identify the fifth digital certificate and the fifth private key; and during performing of S907, the key management TA associatively stores the fifth digital certificate, the fifth private key, and the second identification information.

For example, an input variable of the online provision interface includes the fourth digital certificate, the fourth private key, and the third transport key, or includes the fourth digital certificate, the fourth private key, the third transport key, and the second password. During storing of the digital certificate and the private key, when the key management TA does not encrypt the digital certificate and the private key with any password, the input variable of the online provision interface includes the fourth digital certificate, the fourth private key, and the third transport key. During storing of the digital certificate and the private key, when the key management TA encrypts the digital certificate and the private key with a password, the input variable of the online provision interface includes the fourth digital certificate, the fourth private key, the third transport key, and the second password.

For example, when storing the digital certificate and the private key, the key management TA uses a password to encrypt the digital certificate and the private key. The online provision interface may be defined in the following manner:
int CDRM_Key_Insert_KeySlot (unsigned char^{∗} pTransportKey, int s32TransportKeyLen, int^{∗} keyIndex, unsigned char^{∗} pPasswd, int s32Passlen, unsigned char^{∗} pPrivateKey, int s32privateKeyLen, unsigned char^{∗} pCert, int s32CertLen).
int CDRM_Key_Insert_KeySlot indicates the online provision interface.
keyIndex indicates newly applied identification information. If an entered value is less than 0, it is considered that no keyIndex is entered, so that a new keyIndex is generated and returned. If an entered value is greater than 0, keyIndex is attempted to be updated or inserted. During updating, verification is performed on a password used to encrypt a digital certificate and a private key. If verification fails, the updating fails and the password is not verified. If 0 is entered, a failure message is returned. The password cannot be updated during the updating of keyIndex.
pTransportKey indicates a transport key (TransportKey) obtained through encryption with the assistance of a chip vendor, that is, a third password.
s32TransportKeyLen indicates a length of TransportKey.
pPasswd indicates a password passwd generated by the service TA, that is, the second password.
s32Passlen indicates a length of passwd.
pPrivateKey indicates a private key encrypted with TransportKey, that is, the fourth private key.
s32privateKeyLen indicates a length of the encrypted private key, that is, a length of the fourth private key.
pCert indicates a digital certificate encrypted with TransportKey, that is, the fourth digital certificate.
s32CertLen indicates a length of the encrypted digital certificate, that is, a length of the fourth digital certificate.

For example, if the function of the online provision interface is successfully invoked, the function of the online provision interface may return a fifth value, for example, 0. When another value is returned, it indicates that invoking of the function of the online provision interface fails.

For example, an input variable of the identification applying interface is null, and an output variable is identification information obtained through applying, that is, the second identification information. For example, the identification applying interface may be defined in the following manner:
int CDRM_Key_GetNewKeyIndex (unsigned int^{∗} pNewKeyIndex).
pNewKeyIndex is an output parameter, and is identification information newly generated, that is, the second identification information. If the function of the identification applying interface is successfully invoked, the function of the identification applying interface may return a sixth value, for example, 0. When another value is returned, it indicates that invoking of the function of the identification applying interface fails.

The following specifically describes the foregoing embodiment with reference to a scenario.

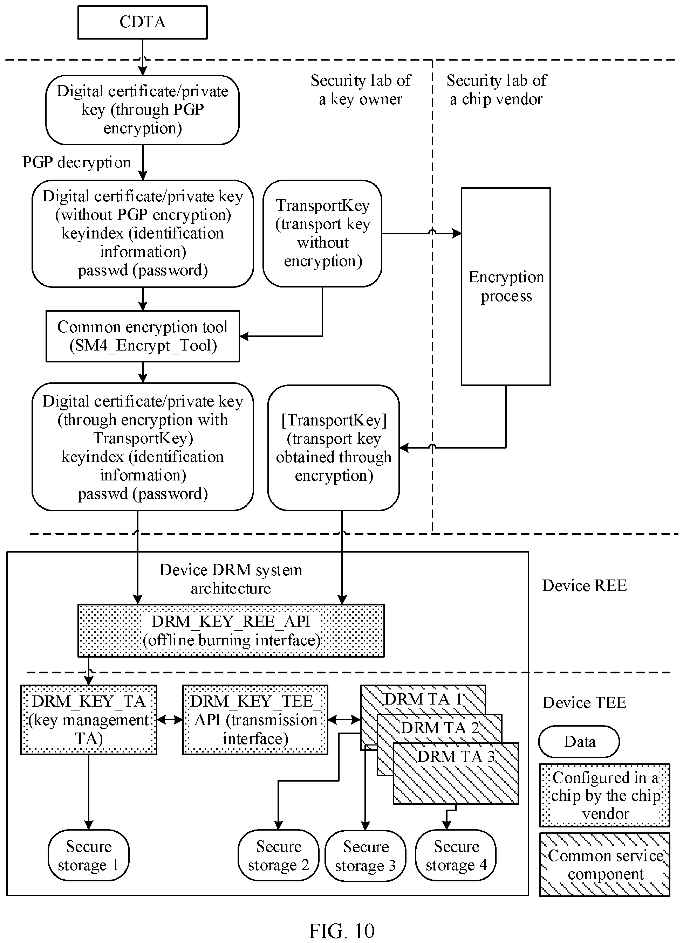

It should be noted that, when the transport key is encrypted by the chip vendor, a relationship between the parties changes. Refer to FIG. 10. The relationship between the parties described in FIG. 10 is different from the relationship between the parties described in FIG. 4 in that a key owner provides a transmission key to the chip vendor for encryption, and the chip vendor transmits an encrypted transmission key to the key owner.

In FIG. 10, an example of the first manner where the digital certificate and the private key are stored through encryption is used for description. An example in which the DRM authority is CDTA is used. The following describes a process for encrypting a digital certificate and a private key, a process for burning a digital certificate and a private key offline, and a process for reading a certificate and a private key in certificate management.

CDTA is a root CA authorization center of DRM, derives a digital certificate (namely, a DRM client certificate) of a terminal device and generates a private key of the terminal device. Then, CDTA securely sends the digital certificate and the private key of the terminal device to a running platform of the key owner. The key owner encrypts the digital certificate and the private key in a security lab. When CDTA securely sends the digital certificate and the private key of the terminal device to the running platform of the key owner, CDTA may send the digital certificate and the private key to the key owner in a manner of a PGP-encrypted email or offline notification. In FIG. 10, an example of the manner of the PGP-encrypted email is used. After obtaining the digital certificate and the private key through the PGP-encrypted email, the key owner uses the PGP technology to decrypt the digital certificate. It should be understood that the key owner may obtain, from CDTA in an order manner, a plurality of digital certificates and private keys corresponding to the plurality of digital certificates. An example of one digital certificate and one private key is used in the following for description.

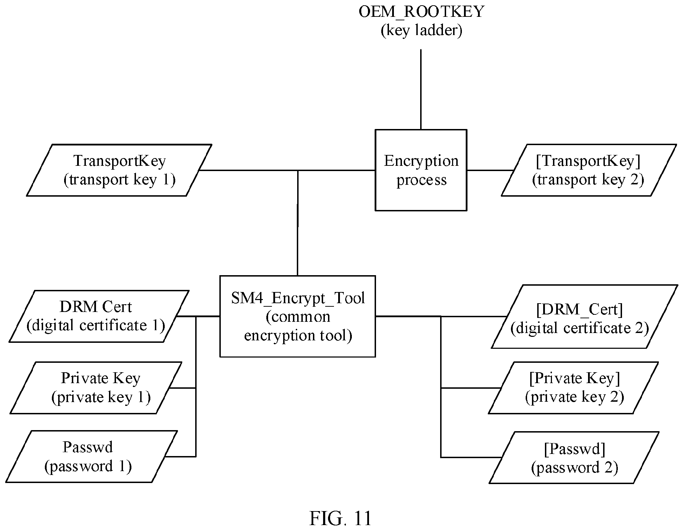

Example 1: How a key owner completes a process of encrypting a digital certificate 1 (DRM cert) and a private key 1 (Private key) in a security lab is described. Refer to FIG. 11.

In FIG. 11, a transport key 1 (TransportKey) is designated by the key owner and is a transport key used to encrypt the digital certificate 1 and the private key 1. Identification information 1 (Keyindex) and a password 1 (passwd) may also be specified by the key owner. keyindex is identification information used to identify the digital certificate 1 and the private key 1 that are burnt in the chip. passwd is used to encrypt the digital certificate 1 (DRM cert) and the private key 1 (Private key) that are burnt in the chip.

The key owner uses TransportKey to encrypt DRM cert and Private key in the security lab to obtain a digital certificate 2 and a private key 2. In FIG. 11, [DRM cert] indicates the digital certificate 2, and [Private key] indicates the private key 2.

In an example, to ensure transmission security for passwd, passwd may also be encrypted with TransportKey to obtain a password 2 (indicated by [passwd] in FIG. 11). In FIG. 11, an example in which passwd is encrypted is used. A running platform may use a common password tool (such as SM4_Encrypt_Tool) to encrypt DRM cert, Private key, and passwd using TransportKey. SM4_Encrypt_Tool is a common algorithm encryption tool that uses a common cryptographic algorithm to encrypt DRM cert, Private key, or passwd. For example, the common cryptographic algorithm may be an electronic codebook book (electronic codebook book, ECB) mode, a cipher block chaining (cipher block chaining, CBC) mode, or a counter (counter, CTR) mode. Before TransportKey is transmitted to a terminal device manufacturer, to ensure transmission security, a chip vendor platform in the security lab of the chip vendor may use a key ladder (for example, OEM ROOTKEY) of a chip OTP area. As shown in FIG. 11, the chip vendor platform uses OEM ROOTKEY to encrypt TransportKey, obtains [TransportKey], and sends [TransportKey] to the key owner. [TransportKey] indicates encrypted TransportKey. The chip vendor then provides [TransportKey] for the key owner, and the key owner sends [DRM cert], [Private key], [TransportKey], and [passwd] to the terminal device manufacturer. Therefore, after obtaining [DRM cert], [Private key], [TransportKey], and [passwd] by using the terminal device manufacturer platform, the terminal device manufacturer burns the digital certificate and the private key to a chip of the terminal device.

For example, Keyindex may also be specified by the terminal device manufacturer. In this case, Keyindex does not need to be transferred to the terminal device manufacturer. In FIG. 11, the example in which Keyindex is transferred by the key owner to the terminal manufacturer is used.

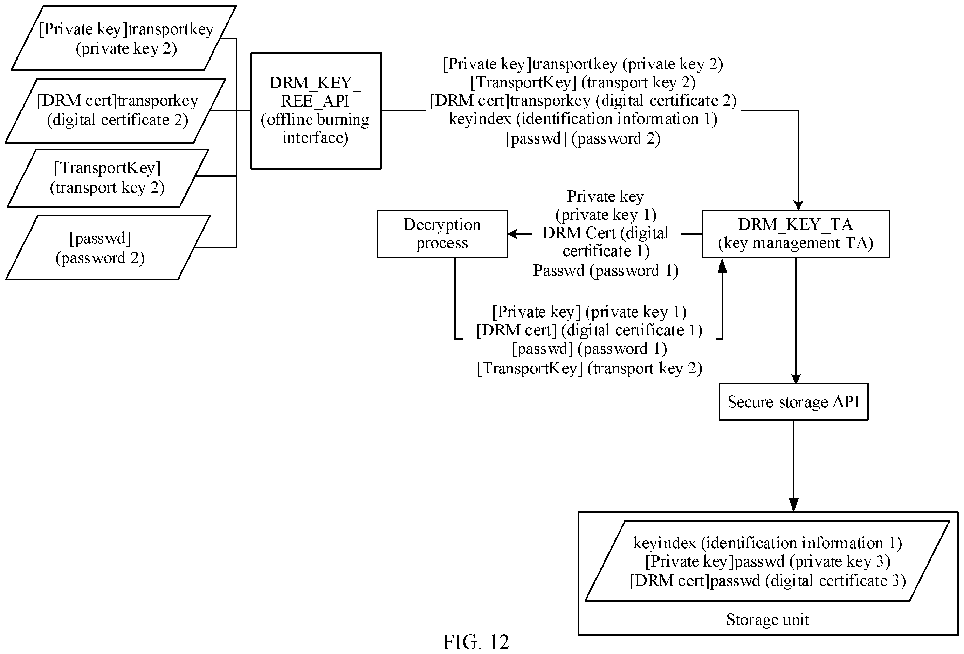

Example 2: A process in which a terminal device manufacturer burns a digital certificate and a private key to a chip of a terminal device by using a terminal device manufacturer platform is described. Refer to FIG. 10 and FIG. 12. DRM_KEY_TA indicates a key management TA, and DRM TA indicates a service TA. In FIG. 10, an example in which three service TAs, namely, a service TA 1 (DRM TA 1), a service TA 2 (DRM TA 2), and a service TA 3 (DRM TA 3), are deployed in a chip is used. DRM_KEY_REE_API indicates an offline burning interface. DRM_KEY_REE_API is deployed in an REE. DRM_KEY_REE_API is used to write an encrypted parameter to DRM_KEY_TA on the TEE. DRM_KEY_REE_API does not decrypt parameters or perform other security service processing.

In FIG. 12, Private key and DRM cert encrypted with TransportKey and Private key and DRM cert encrypted with passwd are distinguished. [Private key]transportkey indicates Private key encrypted with TransportKey, namely, a private key 2. [DRM cert]transportkey indicates DRM cert encrypted with TransportKey, namely, a digital certificate 2. [Private key]passwd indicates Private key encrypted with passwd, namely, a private key 3. [DRM cert]passwd indicates DRM cert encrypted with passwd, namely, a digital certificate 3.
(1) DRM_KEY_REE_API responds to DRM parameters transmitted by the terminal device manufacturer platform, and sends the DRM parameters to DRM KEY TA. For example, the DRM parameters include a data address of [Private key]transportkey, a data address of [DRM cert]transportkey, [passwd], and [TransportKey]. In FIG. 12, an example in which TransportKey is encrypted is used. The DRM parameters may alternatively not include Keyindex. In this case, DRM_KEY_TA may set Keyindex to a default value. For example, the default value may be configured for DRM_KEY_TA on the terminal device manufacturer platform. In FIG. 12, an example in which Keyindex is carried in the DRM parameters is used.
(2) DRM_KEY_TA performs decryption on DRM cert, Private key, passwd, and keyindex to obtain DRM cert, Private key, passwd, and keyindex in plaintext. Specifically, DRM_KEY_TA decrypts [TransportKey] with a key ladder to obtain TransportKey, decrypts [Private key]transportkey, [DRM cert]transportkey, and [passwd] with TransportKey to obtain Private key, DRM cert, and passwd, respectively.
(3) DRM_KEY_TA performs an encryption process in which DRM_KEY_TA uses passwd to encrypt DRM cert and Private key to obtain [DRM cert]passwd and [Private key]passwd.
(4) DRM_KEY_TA associatively writes [DRM cert]passwd, [Private key]passwd, and keyindex into secure storage 1 of DRM_KEY_TA.

After the terminal device manufacturer platform burns the digital certificate and the private key to the chip of the terminal device, if a user of the terminal device needs to use DRM cert and Private key in a process of using a client application, the client application can read DRM cert and Private key from DRM_KEY_TA through a DRM TA. A security interface DRM_KEY_TEE_API is deployed between the DRM TA and DRM_KEY_TA. In this way, the DRM TA reads DRM cert and Private key from DRM_KEY_TA via DRM_KEY_TEE_API. In addition to DRM_KEY_REE_API, client applications are further deployed in the REE of the terminal device. A plurality of different client applications may correspond to one DRM TA, or may correspond to different DRM TAs. For example, in the terminal device, client applications 1 to 5 are deployed. The client application 1 corresponds to a DRM TA 1, the client application 2 and the client application 3 correspond to a DRM TA 2, and the client application 4 and the client application 5 correspond to a DRM TA 3. During running of a client application, to exchange data between the client application and a client server, a digital certificate or a private key may be used. An example of video playing is used. In a live streaming or on-demand video playing process, a digital certificate is needed to establish trust between a DRM client and a DRM server. During data transmission between the DRM client and the DRM server, a private key is used for signing or decryption.

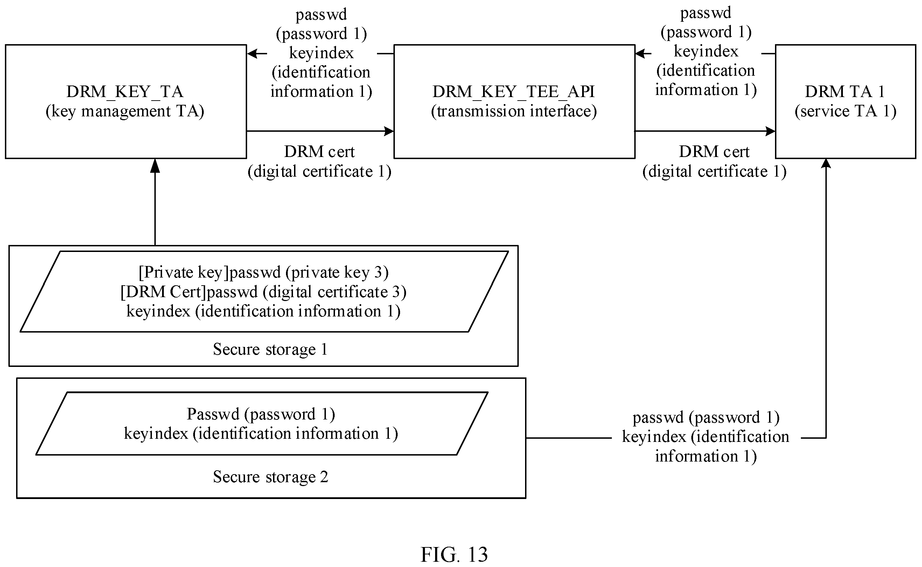

Example 3: A process in which a DRM TA reads a digital certificate is used for description. Refer to FIG. 13. An example in which the DRM TA 1 reads DRM cert from DRM_KEY_TA via DRM_KEY_TEE_API is used. Secure storage 2 corresponding to the DRM TA 1, for example, the secure storage 2 stores passwd and keyindex corresponding to DRM cert.

The DRM TA 1 reads passwd and keyindex from a flash 2. The DRM TA 1 sends passwd and keyindex to DRM_KEY_TA via a certificate transmission interface in DRM_KEY_TEE_API. DRM_KEY_TA obtains [DRM cert]passwd associated with keyindex from a flash 1, and uses passwd to decrypt [DRM cert]passwd to obtain DRM cert; and then, sends DRM cert to the DRM TA 1 via the certificate transmission interface.

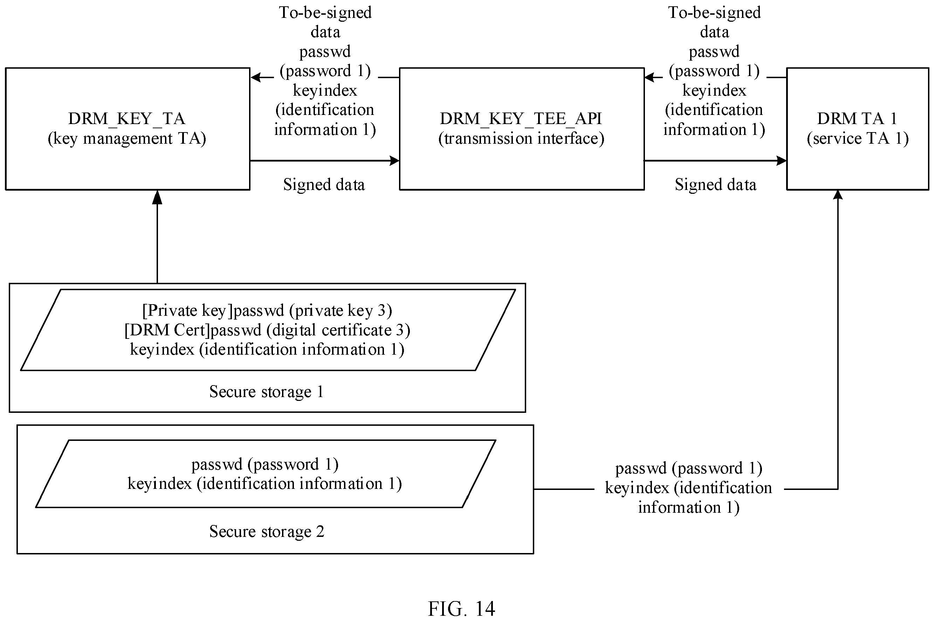

Example 4: A private key signing process is used for description. Refer to FIG. 14. The DRM TA 1 receives to-be-signed data, for example, data to be sent to the DRM server, for example, data generated by a client application 1. The DRM TA 1 reads passwd and keyindex from the secure storage 2, and the DRM TA 1 sends passwd, keyindex, and the to-be-signed data to DRM_KEY_TA via a private key signing interface in DRM_KEY_TEE_API. DRM_KEY_TA obtains [Private key]passwd associated with keyindex from the flash 1; decrypts [Private key]passwd with passwd received from the DRM TA 1 to obtain Private key; and signs the to-be-signed data with Private key to obtain signed data, and sends the signed data to the DRM TA, so that the DRM TA sends the signed data to the client application 1, and the client application 1 sends the signed data to the DRM server.

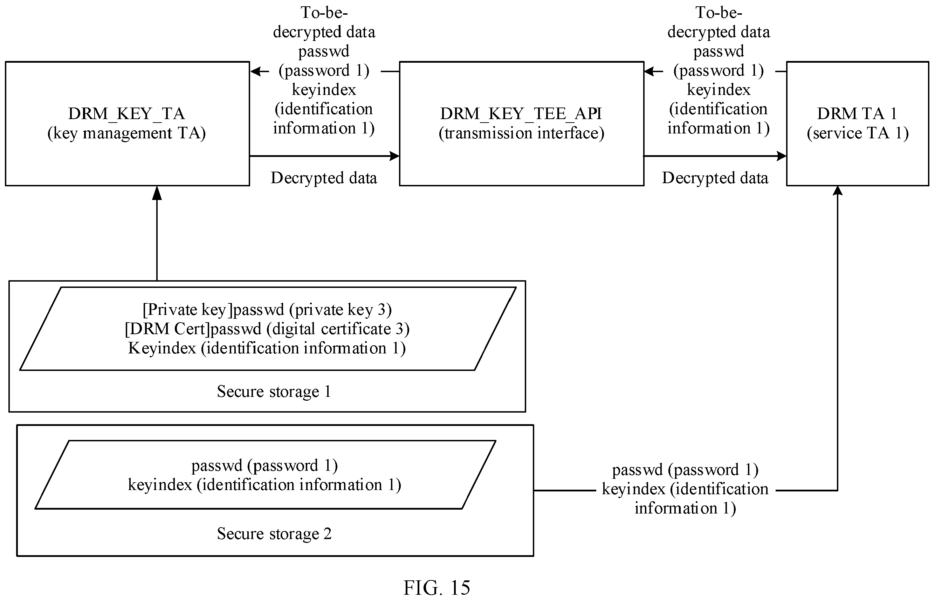

Example 5: A private key decryption process is used for description. Refer to FIG. 15. The DRM TA 1 receives to-be-decrypted data, for example, encrypted data from the DRM server that is received by the client application 1. The DRM TA 1 reads passwd and keyindex from the secure storage 2. The DRM TA 1 sends passwd, keyindex, and the to-be-decrypted data to DRM_KEY_TA via a private key decryption interface in DRM_KEY_TEE_API. DRM_KEY_TA obtains [Private key]passwd associated with keyindex from the secure storage 1, decrypts [Private key]passwd with passwd to obtain Private key, decrypts the to-be-decrypted data with Private key to obtain decrypted data, and sends the decrypted data to the DRM TA. For example, the to-be-decrypted data may be a CEK.

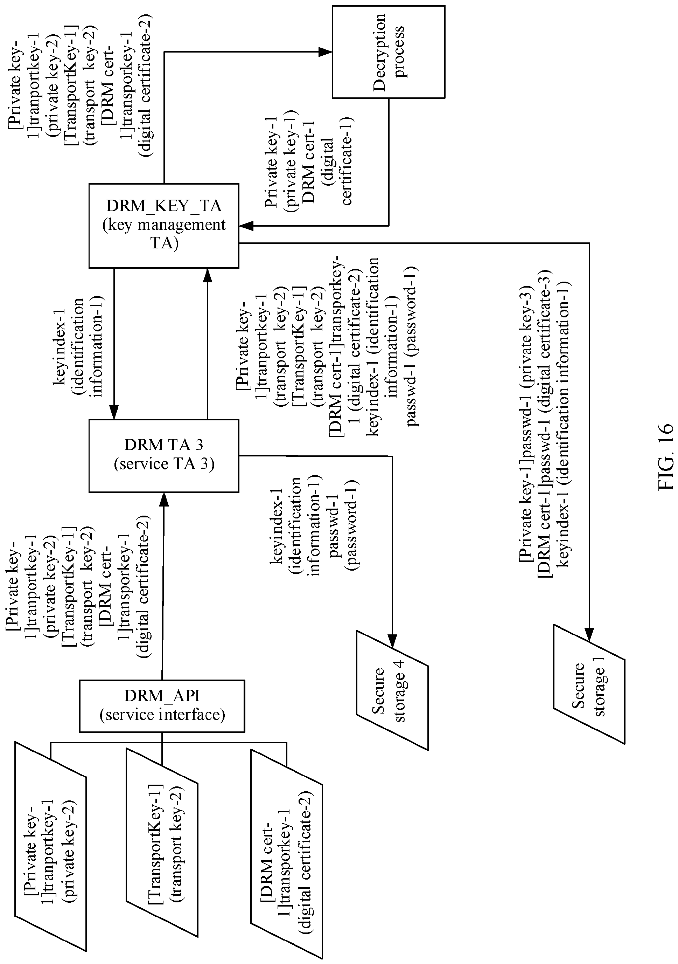

Example 6: The DRM TA 3 is used as an example to describe a process of burning a digital certificate and a private key online. Refer to FIG. 16.

The burnt digital certificate and private key are also encrypted by a key owner in the security lab. Different from an offline burning process, the key owner provides a terminal device manufacturer with the digital certificate and the private key encrypted with a transport key, and the transport key. The transport key may be obtained by being encrypted by the chip vendor, or may alternatively be unencrypted. In the example 6, a transport key-1 (TransportKey-1) is used as an example. TransportKey-1 is not encrypted by the chip vendor. A to-be-written digital certificate is a digital certificate-1 (DRM cert-1), and a to-be-written private key is a private key-1 (Private key-1). A to-be-written digital certificate encrypted with TransportKey-1 is a digital certificate-2 ([DRM cert-1]transportkey-1), and a to-be-written private key encrypted with TransportKey-1 is a private key-2 ([Private key-1] transportkey-1).
(1) The DRM TA 3 receives to-be-written parameters via a service interface (DRM_API), where the to-be-written parameters carry [DRM cert-1]transportkey-1, [Private key-1]transportkey-1, and TransportKey-1.
(2) The DRM TA 3 generates password-1 (passwd-1) that is used to encrypt and store Private key-1 and DRM cert-1.
(3) The DRM TA 3 applies to DRM_KEY_TA for identification information, for example, identification information-1 (keyindex-1), via an identification applying interface in DRM_KEY_TEE_API. In other words, DRM_KEY_TA allocates keyindex 1. For example, a plurality of pieces of identification information may be configured by the terminal device manufacturer for DRM_KEY_TA. DRM_KEY_TA allocates one unused keyindex based on a current use status of keyindex.
(4) The DRM TA3 sends [DRM cert-1]transportkey-1, [Private key-1]transportkey-1, TransportKey-1, keyindex-1, and passwd-1 to DRM_KEY_TA via an online provision interface in DRM_KEY_TEE_API.
(5) DRM_KEY_TA uses TransportKey-1 to decrypt [DRM cert1]transportkey-1 and [Private key-1]transportkey-1 to obtain DRM cert-1 and Private key-1.
(6) DRM_KEY_TA uses passwd-1 to encrypt DRM cert-1 and Private key-1 to obtain the digital certificate-1 ([DRM cert-1]passwd-1) and a private key-3 ([Private key-1]passwd-1).
(7) DRM_KEY_TA associatively stores [DRM cert-1]passwd-1, [Private key-1]passwd-1, and keyindex-1 in the secure storage 1.
(8) The DRM TA 3 writes passwd-1 and keyindex-1 into secure storage 4 corresponding to the DRM TA 3 for subsequent reading of the certificate and use of the private key.

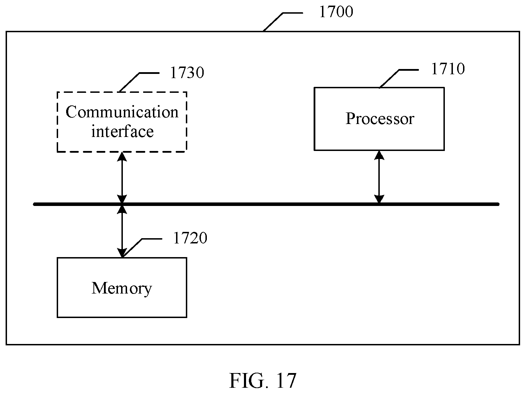

FIG. 17 is a schematic diagram of a structure of another possible certificate management apparatus according to an embodiment of this application. As shown in FIG. 17, an apparatus 1700 includes a processor 1710 and a memory 1720. It should be understood that, when the apparatus 1700 is a chip product, the apparatus 1700 may include only the processor 1710, and the memory 1720 may be considered as a memory chip outside the apparatus 1700. Functions of the offline burning interface, the key management TA, the transmission interface, and the service TA in FIG. 6 may all be implemented by the processor 1710. The apparatus 1700 may further include a communication interface 1730. The communication interface 1730 is configured to communicate with a terminal device manufacturer platform, and receive DRM parameters, to-be-written parameters in offline burning, or the like from the terminal device manufacturer platform. In an implementation process, steps in a processing procedure may be implemented by using an integrated logic circuit of hardware in the processor 1710 or instructions in a form of software, to complete the methods in FIG. 7 to FIG. 16. In this embodiment of this application, the communication interface 1730 may be a hardware interface that may be configured to perform information exchange, such as a circuit or a bus.

The processor 1710 in this embodiment of this application may be a general-purpose processor, a digital signal processor, an application-specific integrated circuit, a field programmable gate array or another programmable logic component, a discrete gate or a transistor logic component, or a discrete hardware component. The general-purpose processor may be a microprocessor, any conventional processor, or the like. The steps of the methods disclosed with reference to the embodiments of this application may be directly performed by a hardware processor, or may be performed by using a combination of hardware in the processor and a software unit. Program code used by the processor 1710 to implement the foregoing method may be stored in the memory 1720. The memory 1720 is coupled to the processor 1710. The coupling in this embodiment of this application is an indirect coupling or a communication connection between apparatuses, units, or modules, may be in an electrical form, a mechanical form, or another form, and is used for information exchange between the apparatuses, the units, or the modules. The processor 1710 may operate in collaboration with the memory 1720. The memory 1730 may be a non-volatile memory, for example, a hard disk drive (hard disk drive, HDD) or a solid-state drive (solid-state drive, SSD). The memory 1720 is any other medium that can carry or store expected program code in a form of instructions or a data structure and that can be accessed by a computer, but is not limited thereto. The memory 1720 is further configured to: associatively store a digital certificate, a private key, and identification information, and associatively store the identification information and a password.

In this embodiment of this application, a specific connection medium between the communication interface 1730, the processor 1710 and the memory 1720 is not limited. In this embodiment of this application, in FIG. 17, the communication interface 1730, the processor 1710, and the memory 1720 are connected through a bus. The bus is represented by a thick line in FIG. 17, and a connection manner between other components is merely described as an example, and is not limited thereto. The bus may be categorized as an address bus, a data bus, a control bus, or the like. For ease of representation, only one thick line is used to represent the bus in FIG. 17, but this does not mean that there is only one bus or only one type of bus.

Based on a same invention idea, an embodiment of this application provides a computer program product, including a computer program. When the computer program is executed on a computer, the computer is enabled to implement the function in any one of the foregoing certificate management method embodiments.

Based on a same invention idea, an embodiment of this application provides a computer program. When the computer program is executed on a computer, the computer is enabled to implement the function in any one of the foregoing certificate management method embodiments.

Based on a same invention idea, an embodiment of this application provides a computer-readable storage medium, configured to store a program and instructions. When the program and the instructions are invoked and executed on a computer, the computer may be enabled to implement the function in any one of the foregoing certificate management method embodiments.

A person skilled in the art should understand that the embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

Definitely, a person skilled in the art can make various modifications and variations to the embodiments of this application without departing from the scope of the embodiments of this application. In this way, this application is intended to cover these modifications and variations of the embodiments of this application provided that they fall within the scope of protection defined by the following claims and their equivalent technologies.

## Claims

1. A certificate management method, wherein the method is applied to an apparatus in which a trusted execution environment TEE is deployed, an offline burning interface is further deployed in the apparatus, a key management trusted application TA is deployed in the TEE, and the method comprises:
obtaining, by the key management TA, digital rights management DRM parameters via the offline burning interface, wherein the DRM parameters comprise an address of a first digital certificate, an address of a first private key, and a transport key, the first digital certificate is a digital certificate obtained by encrypting a second digital certificate with the transport key, the first private key is a private key obtained by encrypting a second private key with the transport key, and the second private key is used to sign data to be sent to a DRM server, or is used to decrypt data from the DRM server;
obtaining, by the key management TA, the first digital certificate and the first private key based on the address of the first digital certificate and the address of the first private key, and separately decrypting the first digital certificate and the first private key with the transport key to obtain the second digital certificate and the second private key; and
associatively storing, by the key management TA, the second digital certificate, the second private key, and first identification information, wherein the first identification information is used to identify the second digital certificate and the second private key.

2. The method according to claim 1, wherein the input parameter further comprises a first password;
the associatively storing, by the key management TA, the second digital certificate, the second private key, and the first identification information comprises:
separately encrypting, by the key management TA, the second digital certificate and the second private key with the first password to obtain a third digital certificate and a third private key; and
associatively storing, by the key management TA, the third digital certificate, the third private key, and the first identification information, wherein the first identification information is used to identify the third digital certificate and the third private key.

3. The method according to claim 1 or 2, wherein N service TAs and a transmission interface are further deployed in the TEE, and N is a positive integer, and the method further comprises:
obtaining, by a first service TA, first information, wherein the first information comprises the first identification information, and the first service TA is any one of the N service TAs; and
obtaining, by the first service TA from the key management TA via the transmission interface, the second digital certificate associated with the first identification information.

4. The method according to claim 3, wherein if the DRM parameters further comprise the first password, the first information further comprises the first password, and the method further comprises:
obtaining, by the first service TA, the second digital certificate from the key management TA via the transmission interface based on the first identification information and the first password.

5. The method according to claim 4, wherein the obtaining, by the first service TA, the second digital certificate from the key management TA via the transmission interface based on the first identification information and the first password comprises:
sending, by the first service TA, a first instruction to the key management TA via the transmission interface, wherein the first instruction carries the first password and the first identification information;
obtaining, by the key management TA, the third digital certificate associated with the first identification information from the stored digital certificate; and
decrypting, by the key management TA, the third digital certificate with the first password to obtain the second digital certificate, and sending the second digital certificate to the first service TA via the transmission interface.

6. The method according to any one of claims 1 to 5, wherein the first service TA is deployed in the TEE, and the method further comprises:
sending, by the first service TA, a second instruction to the key management TA, wherein the second instruction carries first data and the first identification information, and the first service TA is any one of the N service TAs;
obtaining, by the key management TA, the second private key associated with the first identification information from the stored key, and signing or decrypting the first data with the second private key to obtain second data; and
sending, by the key management TA, the second data to the first service TA.

7. The method according to claim 6, wherein if the DRM parameters further comprise the first password, the second instruction further comprises the first password; and
the signing or decrypting the first data with the second private key to obtain second data comprises:
obtaining, by the key management TA, a third private key associated with the first identification information from the stored key, and decrypting the third private key with the first password to obtain the second private key; and
signing or decrypting, by the key management TA, the first data with the second private key to obtain the second data, and sending the second data to the first service TA.

8. The method according to any one of claims 1 to 7, wherein the DRM parameters further comprise at least one of the following:
a length of the transport key, a length of the first identification information, a length of the first private key, and a length of the first digital certificate.

9. The method according to any one of claims 2 to 8, wherein the DRM parameters further comprise a length of the first password.

10. The method according to any one of claims 1 to 9, wherein the offline burning interface is a function interface, and an input variable of the offline burning interface comprises any one of the DRM parameters.

11. The method according to any one of claims 3 to 9, wherein the transmission interface is a function interface, and the transmission interface comprises at least one of the following: an identification applying interface, a certificate reading interface, a private key signing interface, a private key decryption interface, or an online burning interface, wherein
an input variable of the identification applying interface is null;
an input variable of the certificate reading interface comprises the first identification information or comprises the first identification information and the first password;
an input variable of the private key signing interface comprises the first identification information and to-be-signed data or comprises the first identification information, the first password, and the to-be-signed data;
an input variable of the private key decryption interface comprises the first identification information and to-be-decrypted data or comprises the first identification information, the first password, and the to-be-decrypted data; and
an input variable of the online burning interface comprises an encrypted to-be-written digital certificate, an encrypted to-be-written private key, and a transport key used to encrypt the to-be-written digital certificate and the to-be-written private key.

12. The method according to claim 10 or 11, wherein the function interface is an application programming interface API.

13. The method according to any one of claims 1 to 12, wherein the transport key comprises a first transport key and a second transport key, the first digital certificate is a digital certificate obtained by encrypting the second digital certificate with the first transport key, and the first private key is a private key obtained by encrypting the second private key with the second transport key; and
the separately decrypting, by the key management TA, the first digital certificate and the first private key with the transport key to obtain the second digital certificate and the second private key comprises:
decrypting, by the key management TA, the first digital certificate with the first transport key to obtain the second digital certificate, and decrypting the first private key with the second transport key to obtain the second private key.

14. The method according to any one of claims 1 to 13, wherein the transport key is a key encrypted with a key ladder; and
the separately decrypting, by the key management TA, the first digital certificate and the first private key with the transport key to obtain the second digital certificate and the second private key comprises:
decrypting, by the key management TA, the transport key with the key ladder; and
separately decrypting the first digital certificate and the first private key with a decrypted transport key to obtain the second digital certificate and the second private key.

15. The method according to any one of claims 1 to 14, wherein a second service TA is deployed in the TEE, the transmission interface is deployed in the apparatus in which the TEE is deployed, and the method further comprises:
receiving, by the second service TA, to-be-written parameters, wherein the to-be-written parameters comprise a fourth digital certificate, a fourth private key, and a third transport key, the fourth digital certificate is a digital certificate obtained by encrypting a fifth digital certificate with the third transport key, and the fourth private key is a private key obtained by encrypting a fifth private key corresponding to the fifth digital certificate with the third transport key;
applying, by the second service TA, for second identification information from the key management TA via the transmission interface;
sending, by the second service TA, the fourth digital certificate, the fourth private key, the third transport key, and the second identification information to the key management TA;
separately decrypting, by the key management TA, the fourth digital certificate and the fourth private key with the third transport key to obtain the fifth digital certificate and the fifth private key;
associatively storing, by the key management TA, the fifth digital certificate, the fifth private key, and the second identification information; and
storing, by the second service TA, the second identification information.

16. The method according to claim 15, wherein the method further comprises:
generating, by the second service TA, a second password, and storing the second password;
sending, by the second service TA, the second password to the key management TA; and
the associatively storing, by the key management TA, the fifth digital certificate, the fifth private key, and the second identification information comprises:
separately encrypting, by the key management TA, the fifth digital certificate and the fifth private key with the second password to obtain a sixth digital certificate and a sixth private key, and associatively storing the sixth digital certificate, the sixth private key, and the second identification information.

17. A certificate management apparatus, wherein a trusted execution environment TEE is deployed in the apparatus, an offline burning interface is further deployed in the apparatus, and a key management trusted application TA is deployed in the TEE, wherein
the key management TA is configured to obtain digital rights management DRM parameters via the offline burning interface, wherein the DRM parameters comprise an address of a first digital certificate, an address of a first private key, and a transport key, the first digital certificate is a digital certificate obtained by encrypting a second digital certificate with the transport key, the first private key is a private key obtained by encrypting a second private key with the transport key, and the second private key is used to sign data to be sent to a DRM server, or is used to decrypt data from the DRM server; and
the key management TA is further configured to: obtain the first digital certificate and the first private key based on the address of the first digital certificate and the address of the first private key, separately decrypt the first digital certificate and the first private key with the transport key to obtain the second digital certificate and the second private key, and associatively store the second digital certificate, the second private key, and first identification information, wherein the first identification information is used to identify the second digital certificate and the second private key.

18. The apparatus according to claim 17, wherein the DRM parameters further comprise a first password; and the key management TA is specifically configured to: separately encrypt the second digital certificate and the second private key with the first password to obtain a third digital certificate and a third private key, and associatively store the third digital certificate, the third private key, and the first identification information, wherein the first identification information is used to identify the third digital certificate and the third private key.

19. The apparatus according to claim 17 or 18, wherein N service TAs and a transmission interface are further deployed in the TEE, and N is a positive integer; and
a first service TA is configured to: obtain first information, wherein the first information comprises the first identification information, and the first service TA is any one of the N service TAs; and obtain the second digital certificate associated with the first identification information from the key management TA via the transmission interface.

20. The apparatus according to claim 19, wherein if the DRM parameters further comprise the first password, the first information further comprises the first password; and
the first service TA is further configured to obtain the second digital certificate from the key management TA via the transmission interface based on the first identification information and the first password.

21. The apparatus according to claim 20, wherein the first service TA is specifically configured to send a first instruction to the key management TA via the transmission interface, wherein the first instruction carries the first password and the first identification information; and
the key management TA is further configured to: obtain the third digital certificate associated with the first identification information from the stored digital certificate, decrypt the third digital certificate with the first password to obtain the second digital certificate, and send the second digital certificate to the first service TA via the transmission interface.

22. The apparatus according to any one of claims 17 to 21, wherein the first service TA is deployed in the TEE, the first service TA is further configured to send a second instruction to the key management TA, the second instruction carries first data and the first identification information, and the first service TA is any one of the N service TAs;
the key management TA is further configured to obtain the second private key associated with the first identification information from the stored key, and sign or decrypt the first data with the second private key to obtain second data; and
the key management TA is further configured to send the second data to the first service TA.

23. The apparatus according to claim 22, wherein if the DRM parameters further comprise the first password, the second instruction further comprises the first password; and
the key management TA is specifically configured to: obtain the third private key associated with the first identification information from the stored key, decrypt the third private key with the first password to obtain the second private key, sign or decrypt the first data with the second private key to obtain the second data, and send the second data to the first service TA.

24. The apparatus according to any one of claims 17 to 23, wherein the DRM parameters further comprise at least one of the following:
a length of the transport key, a length of the first identification information, a length of the first private key, and a length of the first digital certificate.

25. The apparatus according to any one of claims 18 to 24, wherein the DRM parameters further comprise a length of the first password.

26. The apparatus according to any one of claims 18 to 25, wherein the offline burning interface is a function interface, and an input variable of the offline burning interface comprises any one of the DRM parameters.

27. The apparatus according to any one of claims 18 to 26, wherein the transmission interface is a function interface, and the transmission interface comprises at least one of the following: an identification applying interface, a certificate reading/writing interface, a private key signing interface, a private key decryption interface, or an online burning interface, wherein
an input variable of the identification applying interface is null;
an input variable of the certificate reading/writing interface comprises the first identification information or comprises the first identification information and the first password;
an input variable of the private key signing interface comprises the first identification information and to-be-signed data or comprises the first identification information, the first password, and the to-be-signed data;
an input variable of the private key decryption interface comprises the first identification information and to-be-decrypted data or comprises the first identification information, the first password, and the to-be-decrypted data; and
an input variable of the online burning interface comprises an encrypted to-be-written digital certificate, an encrypted to-be-written private key, and a transport key used to encrypt the to-be-written digital certificate and the to-be-written private key.

28. The apparatus according to claim 26 or 27, wherein the function interface is an application programming interface API.

29. The apparatus according to any one of claims 17 to 28, wherein the transport key comprises a first transport key and a second transport key, the first digital certificate is a digital certificate obtained by encrypting the second digital certificate with the first transport key, and the first private key is a private key obtained by encrypting the second private key with the second transport key; and
the key management TA is specifically configured to decrypt the first digital certificate with the first transport key to obtain the second digital certificate, and decrypt the first private key with the second transport key to obtain the second private key.

30. The apparatus according to any one of claims 17 to 29, wherein the transport key is a key encrypted with a key ladder, and
the key management TA is specifically configured to: decrypt the transport key with the key ladder, and separately decrypt the first digital certificate and the first private key with a decrypted transport key to obtain the second digital certificate and the second private key.

31. The apparatus according to any one of claims 17 to 30, wherein a second service TA is deployed in the TEE, the transmission interface is deployed in the apparatus in which the TEE is deployed;
the second service TA is configured to receive to-be-written parameters, wherein the to-be-written parameters comprise a fourth digital certificate, a fourth private key, and a third transport key, the fourth digital certificate is a digital certificate obtained by encrypting a fifth digital certificate with the third transport key, and the fourth private key is a private key obtained by encrypting a fifth private key corresponding to the fifth digital certificate with the third transport key;
the second service TA is further configured to apply for second identification information from the key management TA via the transmission interface; the key management TA is configured to allocate the second identification information for the second service TA, and send the second identification information to the second service TA via the transmission interface;
the second service TA is further configured to send the fourth digital certificate, the fourth private key, the third transport key, and the second identification information to the key management TA;
the key management TA is further configured to: separately decrypt the fourth digital certificate and the fourth private key with the third transport key to obtain the fifth digital certificate and the fifth private key, and associatively store the fifth digital certificate, the fifth private key, and the second identification information; and
the second service TA is further configured to store the second identification information.

32. The apparatus according to claim 31, wherein
the second service TA is further configured to generate a second password, store the second password, and send the second password to the key management TA; and
the key management TA is specifically configured to: separately encrypt the fifth digital certificate and the fifth private key with the second password to obtain a sixth digital certificate and a sixth private key, and associatively store the sixth digital certificate, the sixth private key, and the second identification information.

33. A certificate management apparatus, wherein the apparatus comprises a processor, a trusted execution environment TEE and an offline burning interface are deployed in the processor, and a key management trusted application TA is deployed in the TEE; and
the processor is configured to invoke software instructions stored in a memory to perform the method according to any one of claims 1 to 16.

34. A computer-readable storage medium, wherein the computer-readable storage medium stores instructions; and when the instructions are run on a computer or a processor, the computer or the processor is enabled to perform the method according to any one of claims 1 to 16.

35. A computer program product comprising instructions, wherein when the computer program product runs on a computer or a processor, the computer or the processor is enabled to perform the method according to any one of claims 1 to 16.
